# EUROPEAN PATENT APPLICATION

(11) **EP 4 604 626 A1**
(43) Date of publication of application: **20.08.2025**
(21) Application number: 25157990.0
(22) Date of filing: 14.02.2025
(51) Int. Cl.: H04W 52/02, H04W 76/28

(54) **METHOD AND DEVICE FOR PERFORMING WIRELESS COMMUNICATION USING LOW POWER RECEIVER**

(30) Priority: 16.02.2024 KR 20240022977; 23.01.2025 KR 20250010302
(71) Applicant: KT Corporation, Seongnam-si, Gyeonggi-do 13606 (KR)
(72) Inventor: KIM, Han Jun, 13606 Seongnam-si Gyeonggi-do (KR); PARK, Kyu Jin, 13606 Seongnam-si Gyeonggi-do (KR); LEE, Eun Jong, 13606 Seongnam-si Gyeonggi-do (KR)
(74) Representative: Brevalex

(57) **Abstract**

Provided are a method and device for performing wireless communication using a low-power receiver. The method of a UE may include receiving setting information including configuration information regarding a low-power wake-up operation and configuration information regarding a DRX operation, monitoring a wake-up signal through the low-power receiver based on the setting information, monitoring a downlink control channel and receiving a downlink data channel, through a transceiver, upon receiving when the wake-up, and changing the DRX operation for a predetermined period, based on the setting information.

## Description

### CROSS REFERENCE TO RELATED APPLICATION

This application claims priority from Korean Patent Application No. 10-2024-0022977, filed on February 16, 2024, and 10-2025-0010302, filed on January 23, 2025, which are hereby incorporated by reference for all purposes as if fully set forth herein.

### BACKGROUND

### Field

The present disclosure relates to a method and device for performing wireless communication using a low-power receiver in a radio access network ("5G", "new radio (NR)") or a next-generation radio access network (meaning "5G-advanced", "6G" or a subsequent 3GPP radio access network).

### Description of Related Art

The 3^{rd} generation partnership project (3GPP) continues research and development of wireless communication technology. In wireless communication systems, energy efficiency of user equipment (UE) is a crucial consideration, along with latency, reliability, and availability. Currently, a UE may require frequent charging depending on individual usage patterns. Extending the UE's batter lifetime is essential for enhancing energy efficiency and improving the user experience. Energy efficiency is especially critical for UEs without a steady energy source.

Power consumption may vary depending on the length of a configured wake-up period. However, high latency can occur such as when a large DRX cycle is used to extend battery life. As a result, this approach may not be suitable for services that require both long battery lifetime and low latency.

In this aspect, a specific design is needed to enable the UE to consume power more efficiently during a wake-up operation.

### BRIEF SUMMARY

The disclosure may provide a method and device for performing wireless communication using a low-power receiver.

In an aspect, the disclosure may provide a method for performing wireless communication by a user equipment (UE) using a low-power receiver (low power wakeup receiver, LR). The method may include receiving setting information including configuration information regarding a low-power wake-up operation and configuration information regarding a discontinuous reception (DRX) operation, monitoring a wake-up signal (low power wake-up signal, LP-WUS) through the low-power receiver based on the setting information, monitoring a downlink control channel (PDCCH) and receiving a downlink data channel (PDSCH), through a transceiver, when the wake-up signal is received, and changing the DRX operation for a predetermined section, based on the setting information.

In another aspect, the disclosure may provide a method for controlling an operation of a UE performing wireless communication using a low-power receiver (low power wake-up receiver, LR) by a base station. The method may include transmitting setting information including configuration information regarding a low-power wake-up operation and configuration information regarding a discontinuous reception (DRX) operation, instructing the UE to monitor a wake-up signal (WUS) and transmitting the wake-up signal based on the setting information, transmitting a downlink control channel (PDCCH) and a downlink data channel (PDSCH), and instructing the UE to restart the wake-up signal monitoring based on the setting information.

In further another aspect, the disclosure may provide a UE performing wireless communication using a low-power receiver (low power wakeup receiver, LR). The UE includes a low-power receiver, a transceiver, and a controller controlling an operation of the low-power receiver and the transceiver, wherein the controller receives setting information including configuration information regarding a low-power wake-up operation and configuration information regarding a discontinuous reception (DRX) operation, monitors a wake-up signal (low power wake-up signal, LP-WUS) through the low-power receiver based on the setting information, monitors a downlink control channel (PDCCH) and receives a downlink data channel (PDSCH) through a transceiver, when the wake-up signal is received, and changes the DRX operation for a predetermined section, based on the setting information.

In still another aspect, the disclosure may provide a base station controlling an operation of a UE performing wireless communication using a low-power receiver. The base station may incliude a transmitter, a receiver, and a controller controlling an operation of the transmitter and the receiver, wherein the controller transmits setting information including configuration information regarding a low-power wake-up operation and configuration information regarding a discontinuous reception (DRX) operation, instructs the UE to monitor a wake-up signal (WUS) and transmits the wake-up signal based on the setting information, transmits a downlink control channel (PDCCH) and a downlink data channel (PDSCH), and instructs the UE to restart the wake-up signal monitoring based on the setting information.

According to the embodiments, wireless communication may be enabled using a low-power receiver designed to perform a wake-up operation that consumes power efficiently.

It is also possible to further reduce the UE's power consumption by limiting the case where the main radio (MR) unnecessarily wakes up according to a preset DRX on-duration and detection of a low-power wake-up signal in a UE simultaneously supporting a low-power wake-up operation and DRX.

### DESCRIPTION OF DRAWINGS

The above and other aspects, features, and advantages of the disclosure will be more apparent from the following detailed description taken in conjunction with the accompanying drawings, in which:
FIG. 1 is a view schematically illustrating an NR wireless communication system in accordance with embodiments of the disclosure;
FIG. 2 is a view schematically illustrating a frame structure in an NR system in accordance with embodiments of the disclosure.
FIG. 3 is a view for explaining resource grids supported by a radio access technology in accordance with embodiments of the disclosure;
FIG. 4 is a view for explaining bandwidth parts supported by a radio access technology in accordance with embodiments of the disclosure;
FIG. 5 is a view illustrating an example of a synchronization signal block in a radio access technology in accordance with embodiments of the disclosure;
FIG. 6 is a signal diagram for explaining a random access procedure in a radio access technology in accordance with embodiments of the disclosure;
FIG. 7 is a view for explaining CORESET;
FIG. 8 is a view illustrating an MR sleep/wake-up operation based on duty-cycled LP-WUS monitoring;
FIG. 9 is a view illustrating an MR sleep/wake-up operation based on continuous LP-WUS monitoring;
FIG. 10 is a a flowchart illustrating a method of a UE for performing wireless communication using a low-power receiver according to an embodiment;
FIG. 11 is a flowchart illustrating a method of a base station for controlling an operation of a UE performing wireless communication using a low-power receiver according to an embodiment;
FIG. 12 is a view illustrating a case in which reception of LR triggered PDCCH/PDSCH data is completed before a DRX on-duration starts according to an embodiment;
FIG. 13 is a view illustrating a case in which reception of LR triggered PDCCH/PDSCH data is completed while a DRX on-duration proceeds according to an embodiment;
FIG. 14 is a view illustrating a case in which reception of LR triggered PDCCH/PDSCH data is completed after a DRX on-duration expires according to an embodiment;
FIG. 15 is a view illustrating changing DRX on-duration-related information when a low-power receiver receives an LP-WUS according to an embodiment;
FIG. 16 is a view illustrating changing DRX on-duration-related information when a low-power receiver receives an LP-WUS according to another embodiment;
FIG. 17 is a view illustrating a PDCCH monitoring skip operation based on a low-power receiver according to an embodiment;
FIG. 18 is a view illustrating a configuration of a UE according to another embodiment; and
FIG. 19 is a view illustrating a configuration of a base station according to another embodiment.

### DETAILED DESCRIPTION

Hereinafter, some embodiments of the disclosure will be described in detail with reference to the accompanying illustrative drawings. In the drawings, like reference numerals are used to denote like elements throughout the drawings, even if they are shown on different drawings. Further, in the following description of the disclosure, a detailed description of known functions and configurations incorporated herein will be omitted when it may make the subject matter of the disclosure rather unclear. When the expression "include", "have", "comprise", or the like as mentioned herein is used, any other part may be added unless the expression "only" is used. When an element is expressed in the singular, the element may cover the plural form unless a special mention is explicitly made of the element.

In addition, terms, such as first, second, A, B, (A), (B) or the like may be used herein when describing components of the disclosure. Each of these terminologies is not used to define an essence, order or sequence of a corresponding component but used merely to distinguish the corresponding component from other component(s).

In describing the positional relationship between components, if two or more components are described as being "connected", "combined", or "coupled" to each other, it should be understood that two or more components may be directly "connected", "combined", or "coupled" to each other, and that two or more components may be "connected", "combined", or "coupled" to each other with another component "interposed" therebetween. In this case, another component may be included in at least one of the two or more components that are "connected", "combined", or "coupled" to each other.

In the description of a sequence of operating methods or manufacturing methods, for example, the expressions using "after", "subsequent to", "next", "before", and the like may also encompass the case in which operations or processes are performed discontinuously unless "immediately" or "directly" is used in the expression.

Numerical values for components or information corresponding thereto (e.g., levels or the like), which are mentioned herein, may be interpreted as including an error range caused by various factors (e.g., process factors, internal or external impacts, noise, etc.) even if an explicit description thereof is not provided.

The wireless communication system in the present specification refers to a system for providing various communication services, such as a voice service and a data service, using radio resources. The wireless communication system may include a user equipment (UE), a base station, a core network, and the like.

Embodiments disclosed below may be applied to a wireless communication system using various radio access technologies. For example, the embodiments may be applied to various radio access technologies such as code division multiple access (CDMA), frequency division multiple access (FDMA), time division multiple access (TDMA), orthogonal frequency division multiple access (OFDMA), single-carrier frequency division multiple access (SC-FDMA), non-orthogonal multiple access (NOMA), or the like. In addition, the radio access technology may refer to respective generation communication technologies established by various communication organizations, such as 3GPP, 3GPP2, WiFi, Bluetooth, IEEE, ITU, or the like, as well as a specific access technology. For example, CDMA may be implemented as a wireless technology such as universal terrestrial radio access (UTRA) or CDMA2000. TDMA may be implemented as a wireless technology such as global system for mobile communications (GSM)/general packet radio service (GPRS)/enhanced data rates for GSM evolution (EDGE). OFDMA may be implemented as a wireless technology such as IEEE (Institute of Electrical and Electronics Engineers) 802.11 (Wi-Fi), IEEE 802.16 (WiMAX), IEEE 802-20, evolved UTRA (E-UTRA), and the like. IEEE 802.16m is evolution of IEEE 802.16e, which provides backward compatibility with systems based on IEEE 802.16e. UTRA is a part of a universal mobile telecommunications system (UMTS). 3GPP (3rd-generation partnership project) LTE (long-term evolution) is a part of E-UMTS (evolved UMTS) using evolved-UMTS terrestrial radio access (E-UTRA), which adopts OFDMA in a downlink and SC-FDMA in an uplink. As described above, the embodiments may be applied to radio access technologies that have been launched or commercialized, and may be applied to radio access technologies that are being developed or will be developed in the future.

The UE used in the specification must be interpreted as a broad meaning that indicates a device including a wireless communication module that communicates with a base station in a wireless communication system. For example, the UE includes user equipment (UE) in WCDMA, LTE, NR, HSPA, IMT-2020 (5G or New Radio), and the like, a mobile station in GSM, a user terminal (UT), a subscriber station (SS), a wireless device, and the like. In addition, the UE may be a portable user device, such as a smart phone, or may be a vehicle, a device including a wireless communication module in the vehicle, and the like in a V2X communication system according to the usage type thereof. In the case of a machine-type communication (MTC) system, the UE may refer to an MTC terminal, an M2M terminal, or a URLLC terminal, which employs a communication module capable of performing machine-type communication.

A base station or a cell in the present specification refers to an end that communicates with a UE through a network and encompasses various coverage regions such as a Node-B, an evolved Node-B (eNB), a gNode-B, a low-power node (LPN), a sector, a site, various types of antennas, a base transceiver system (BTS), an access point, a point (e.g., a transmission point, a reception point, or a transmission/reception point), a relay node, a megacell, a macrocell, a microcell, a picocell, a femtocell, a remote radio head (RRH), a radio unit (RU), a small cell, and the like. In addition, the cell may be used as a meaning including a bandwidth part (BWP) in the frequency domain. For example, the serving cell may refer to an active BWP of a UE.

The various cells listed above are provided with a base station controlling one or more cells, and the base station may be interpreted as two meanings. The base station may be 1) a device for providing a megacell, a macrocell, a microcell, a picocell, a femtocell, or a small cell in connection with a wireless region, or the base station may be 2) a wireless region itself. In the above description 1), the base station may be the devices controlled by the same entity and providing predetermined wireless regions or all devices interacting with each other and cooperatively configuring a wireless region. For example, the base station may be a point, a transmission/reception point, a transmission point, a reception point, and the like according to the configuration method of the wireless region. In the above description 2), the base station may be the wireless region in which a user equipment (UE) may be enabled to transmit data to and receive data from the other UE or a neighboring base station.

In this specification, the cell may refer to coverage of a signal transmitted from a transmission/reception point, a component carrier having coverage of a signal transmitted from a transmission/reception point (or a transmission point), or a transmission/reception point itself.

An uplink (UL) refers to a scheme of transmitting data from a UE to a base station, and a downlink (DL) refers to a scheme of transmitting data from a base station to a UE. The downlink may mean communication or communication paths from multiple transmission/reception points to a UE, and the uplink may mean communication or communication paths from a UE to multiple transmission/reception points. In the downlink, a transmitter may be a part of the multiple transmission/reception points, and a receiver may be a part of the UE. In addition, in the uplink, the transmitter may be a part of the UE, and the receiver may be a part of the multiple transmission/reception points.

The uplink and downlink transmit and receive control information over a control channel, such as a physical downlink control channel (PDCCH) and a physical uplink control channel (PUCCH). The uplink and downlink transmit and receive data over a data channel such as a physical downlink shared channel (PDSCH) and a physical uplink shared channel (PUSCH). Hereinafter, the transmission and reception of a signal over a channel, such as PUCCH, PUSCH, PDCCH, PDSCH, or the like, may be expressed as "PUCCH, PUSCH, PDCCH, PDSCH, or the like is transmitted and received".

For the sake of clarity, the following description will focus on 3GPP LTE/LTE-A/NR (New Radio) communication systems, but technical features of the disclosure are not limited to the corresponding communication systems.

The 3GPP has been developing a 5G (5th-Generation) communication technology in order to meet the requirements of a next-generation radio access technology of ITU-R after studying 4G (4th-generation) communication technology. Specifically, 3GPP is developing, as a 5G communication technology, LTE-A pro by improving the LTE-Advanced technology so as to conform to the requirements of ITU-R and a new NR communication technology that is totally different from 4G communication technology. LTE-A pro and NR all refer to the 5G communication technology. Hereinafter, the 5G communication technology will be described on the basis of NR unless a specific communication technology is specified.

Various operating scenarios have been defined in NR in consideration of satellites, automobiles, new verticals, and the like in the typical 4G LTE scenarios so as to support an enhanced mobile broadband (eMBB) scenario in terms of services, a massive machine-type communication (mMTC) scenario in which UEs spread over a broad region at a high UE density, thereby requiring low data rates and asynchronous connections, and an ultra-reliability and low-latency (URLLC) scenario that requires high responsiveness and reliability and supports high-speed mobility.

In order to satisfy such scenarios, NR introduces a wireless communication system employing a new waveform and frame structure technology, a low-latency technology, a super-high frequency band (mmWave) support technology, and a forward compatible provision technology. In particular, the NR system has various technological changes in terms of flexibility in order to provide forward compatibility. The primary technical features of NR will be described below with reference to the drawings.

### <Overview of NR System>

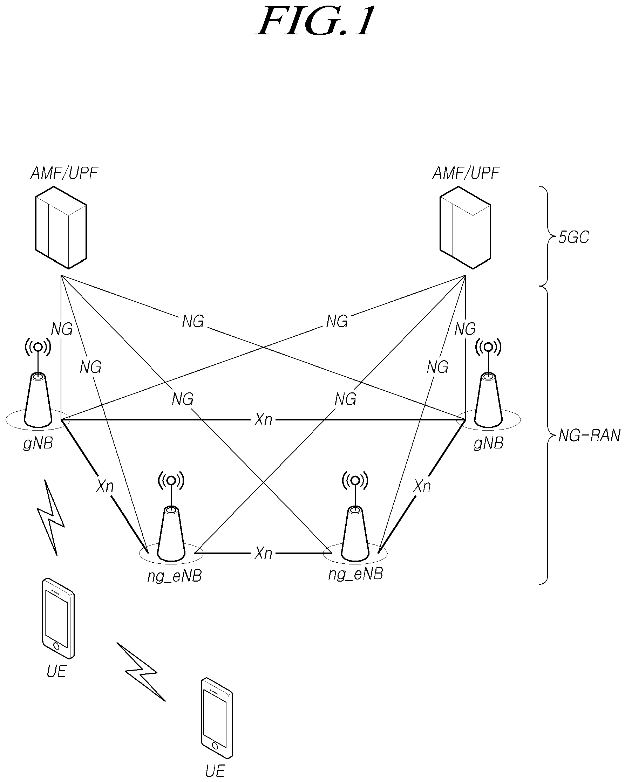

FIG. 1 is a view schematically illustrating an NR system.

Referring to FIG. 1, the NR system is divided into a 5G core network (5GC) and an NG-RAN part. The NG-RAN includes gNBs and ng-eNBs providing user plane (SDAP/PDCP/RLC/MAC/PHY) and user equipment (UE) control plane (RRC) protocol ends. The gNBs or the gNB and the ng-eNB are connected to each other through Xn interfaces. The gNB and the ng-eNB are connected to the 5GC through NG interfaces, respectively. The 5GC may be configured to include an access and mobility management function (AMF) for managing a control plane, such as a UE connection and mobility control function, and a user plane function (UPF) controlling user data. NR supports both frequency bands below 6 GHz (frequency range 1 FR1 FR1) and frequency bands equal to or greater than 6 GHz (frequency range 2 FR2 FR2).

The gNB denotes a base station that provides a UE with an NR user plane and control plane protocol end. The ng-eNB denotes a base station that provides a UE with an E-UTRA user plane and control plane protocol end. The base station described in the present specification should be understood as encompassing the gNB and the ng-eNB. However, the base station may be also used to refer to the gNB or the ng-eNB separately from each other, as necessary.

### <NR Waveform, Numerology, and Frame Structure>

NR uses a CP-OFDM waveform using a cyclic prefix for downlink transmission and uses CP-OFDM or DFT-s-OFDM for uplink transmission. OFDM technology is easy to combine with a multiple-input multiple-output (MIMO) scheme and allows a low-complexity receiver to be used with high frequency efficiency.

Since the three scenarios described above have different requirements for data rates, delay rates, coverage, and the like from each other in NR, it is necessary to efficiently satisfy the requirements for each scenario over frequency bands constituting the NR system. To this end, a technique for efficiently multiplexing radio resources based on a plurality of different numerologies has been proposed.

Specifically, the NR transmission numerology is determined on the basis of subcarrier spacing and a cyclic prefix (CP). As shown in Table 1 below, "µ" is used as an exponential value of 2 so as to be changed exponentially on the basis of 15 kHz.

**[Table 1]**

| µ | Subcarrier spacing | Cyclic prefix | Supported for data | Supported for synch |
|---|---|---|---|---|
| 0 | 15 | normal | Yes | Yes |
| 1 | 30 | normal | Yes | Yes |
| 2 | 60 | Normal, Extended | Yes | No |
| 3 | 120 | normal | Yes | Yes |
| 4 | 240 | normal | No | Yes |

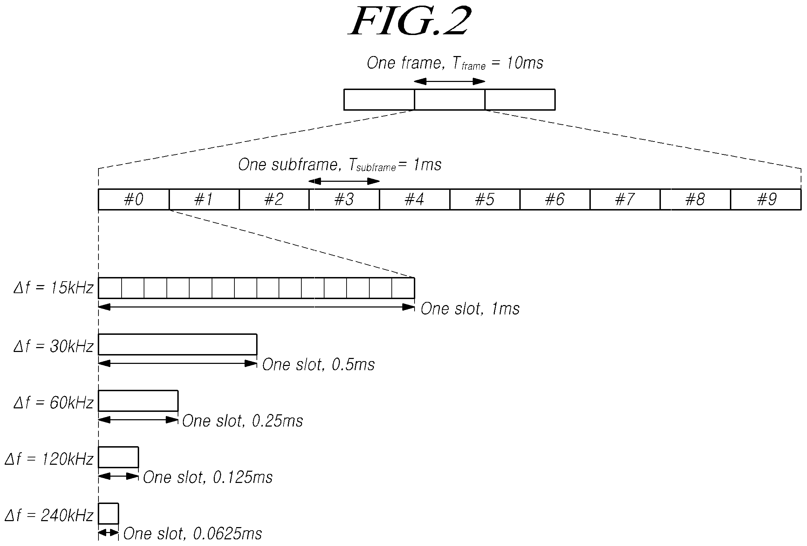

As shown in Table 1 above, NR may have five types of numerologies according to subcarrier spacing. This is different from LTE, which is one of the 4G-communication technologies, in which the subcarrier spacing is fixed to 15 kHz. Specifically, in NR, subcarrier spacing used for data transmission is 15, 30, 60, or 120 kHz, and subcarrier spacing used for synchronization signal transmission is 15, 30, 120, or 240 kHz. In addition, an extended CP is applied only to the subcarrier spacing of 60 kHz. A frame that includes 10 subframes each having the same length of 1 ms and has a length of 10 ms is defined in the frame structure in NR. One frame may be divided into half frames of 5 ms, and each half frame includes 5 subframes. In the case of a subcarrier spacing of 15 kHz, one subframe includes one slot, and each slot includes 14 OFDM symbols. FIG. 2 is a view for explaining a frame structure in an NR system.

Referring to FIG. 2, a slot includes 14 OFDM symbols, which are fixed, in the case of a normal CP, but the length of the slot in the time domain may be varied depending on subcarrier spacing. For example, in the case of a numerology having a subcarrier spacing of 15 kHz, the slot is configured to have the same length of 1 ms as that of the subframe. On the other hand, in the case of a numerology having a subcarrier spacing of 30 kHz, the slot includes 14 OFDM symbols, but one subframe may include two slots each having a length of 0.5 ms. That is, the subframe and the frame may be defined using a fixed time length, and the slot may be defined as the number of symbols such that the time length thereof is varied depending on the subcarrier spacing.

NR defines a basic unit of scheduling as a slot and also introduces a minislot (or a subslot or a non-slot-based schedule) in order to reduce a transmission delay of a radio section. If wide subcarrier spacing is used, the length of one slot is shortened in inverse proportion thereto, thereby reducing a transmission delay in the radio section. A minislot (or subslot) is intended to efficiently support URLLC scenarios, and the minislot may be scheduled in 2, 4, or 7 symbol units.

In addition, unlike LTE, NR defines uplink and downlink resource allocation as a symbol level in one slot. In order to reduce a HARQ delay, the slot structure capable of directly transmitting HARQ ACK/NACK in a transmission slot has been defined. Such a slot structure is referred to as a "self-contained structure", which will be described.

NR was designed to support a total of 256 slot formats, and 62 slot formats thereof are used in 3GPP Rel-15. In addition, NR supports a common frame structure constituting an FDD or TDD frame through combinations of various slots. For example, NR supports i) a slot structure in which all symbols of a slot are configured for a downlink, ii) a slot structure in which all symbols are configured for an uplink, and iii) a slot structure in which downlink symbols and uplink symbols are mixed. In addition, NR supports data transmission that is scheduled to be distributed to one or more slots. Accordingly, the base station may inform the UE of whether the slot is a downlink slot, an uplink slot, or a flexible slot using a slot format indicator (SFI). The base station may inform a slot format by instructing, using the SFI, the index of a table configured through UE-specific RRC signaling. Further, the base station may dynamically instruct the slot format through downlink control information (DCI) or may statically or quasi-statically instruct the same through RRC signaling.

### <Physical Resources of NR>

With regard to physical resources in NR, antenna ports, resource grids, resource elements, resource blocks, bandwidth parts, and the like are taken into consideration.

The antenna port is defined to infer a channel carrying a symbol on an antenna port from the other channel carrying another symbol on the same antenna port. If large-scale properties of a channel carrying a symbol on an antenna port can be inferred from the other channel carrying a symbol on another antenna port, the two antenna ports may have a quasi-co-located or quasi-co-location (QC/QCL) relationship. The large-scale properties include at least one of delay spread, Doppler spread, a frequency shift, an average received power, and a received timing.

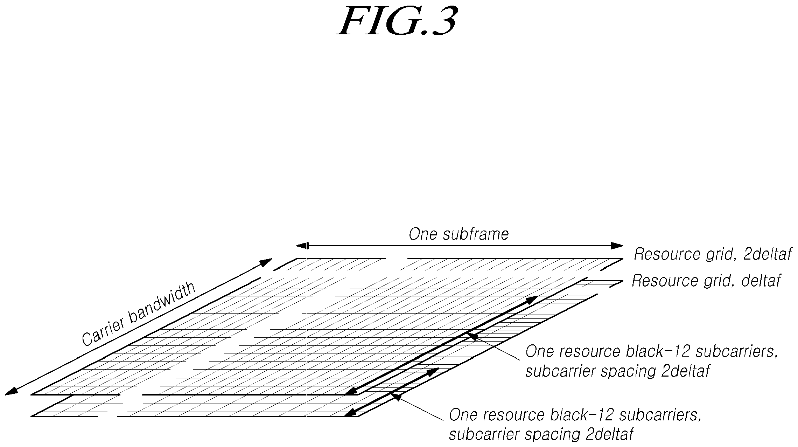

FIG. 3 illustrates resource grids supported by a radio access technology in accordance with embodiments of the disclosure.

Referring to FIG. 3, resource grids may exist according to respective numerologies because NR supports a plurality of numerologies in the same carrier. In addition, the resource grids may exist depending on antenna ports, subcarrier spacing, and transmission directions.

A resource block includes 12 subcarriers and is defined only in the frequency domain. In addition, a resource element includes one OFDM symbol and one subcarrier. Therefore, as shown in FIG. 3, the size of one resource block may be varied according to the subcarrier spacing. Further, "Point A" that acts as a common reference point for the resource block grids, a common resource block, and a virtual resource block are defined in NR.

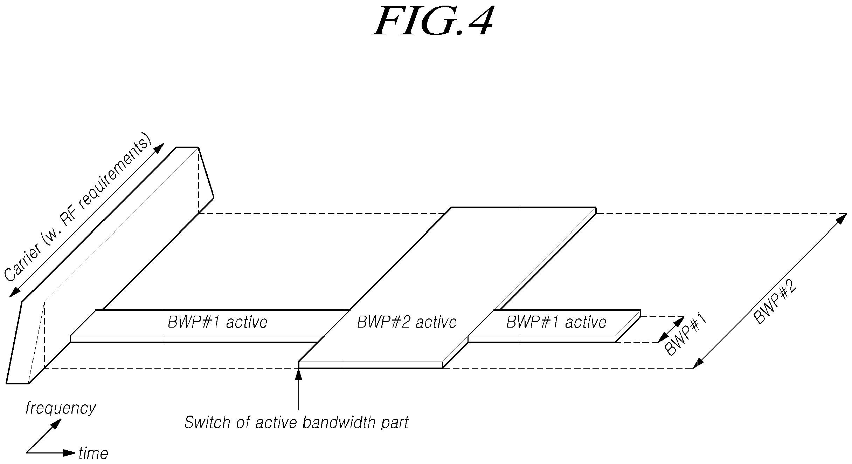

FIG. 4 illustrates bandwidth parts supported by a radio access technology in accordance with embodiments of the disclosure.

Unlike LTE in which the carrier bandwidth is fixed to 20 MHz, the maximum carrier bandwidth is configured as 50 MHz to 400 MHz depending on the subcarrier spacing in NR. Therefore, it is not assumed that all UEs use the entire carrier bandwidth. Accordingly, as shown in FIG. 4, bandwidth parts (BWPs) may be specified within the carrier bandwidth in NR so that the UE may use the same. In addition, the bandwidth part may be associated with one numerology, may include a subset of consecutive common resource blocks, and may be activated dynamically over time. The UE has up to four bandwidth parts in each of the uplink and the downlink. The UE transmits and receives data using an activated bandwidth part during a given time.

In the case of a paired spectrum, uplink and downlink bandwidth parts are configured independently. In the case of an unpaired spectrum, in order to prevent unnecessary frequency re-tuning between a downlink operation and an uplink operation, the downlink bandwidth part and the uplink bandwidth part are configured in pairs to share a center frequency.

### <Initial Access in NR>

In NR, a UE performs a cell search and a random access procedure in order to access and communicates with a base station.

The cell search is a procedure of the UE for synchronizing with a cell of a corresponding base station using a synchronization signal block (SSB) transmitted from the base station and acquiring a physical-layer cell ID and system information.

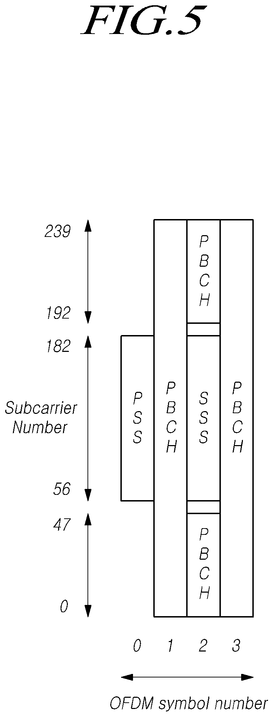

FIG. 5 illustrates an example of a synchronization signal block in a radio access technology in accordance with embodiments of the disclosure.

Referring to FIG. 5, the SSB includes a primary synchronization signal (PSS) and a secondary synchronization signal (SSS), which occupy one symbol and 127 subcarriers, and PBCHs spanning three OFDM symbols and 240 subcarriers.

The UE monitors the SSB in the time and frequency domain, thereby receiving the SSB.

The SSB may be transmitted up to 64 times for 5 ms. A plurality of SSBs are transmitted by different transmission beams within a time of 5 ms, and the UE performs detection on the assumption that the SSB is transmitted every 20 ms based on a specific beam used for transmission. The number of beams that may be used for SSB transmission within 5 ms may be increased as the frequency band is increased. For example, up to 4 SSB beams may be transmitted at a frequency band of 3 GHz or less, and up to 8 SSB beams may be transmitted at a frequency band of 3 to 6 GHz. In addition, the SSBs may be transmitted using up to 64 different beams at a frequency band of 6 GHz or more.

One slot includes two SSBs, and a start symbol and the number of repetitions in the slot are determined according to subcarrier spacing as follows.

Unlike the SS in the typical LTE system, the SSB is not transmitted at the center frequency of a carrier bandwidth. That is, the SSB may also be transmitted at the frequency other than the center of the system band, and a plurality of SSBs may be transmitted in the frequency domain in the case of supporting a broadband operation. Accordingly, the UE monitors the SSB using a synchronization raster, which is a candidate frequency position for monitoring the SSB. A carrier raster and a synchronization raster, which are the center frequency position information of the channel for the initial connection, were newly defined in NR, and the synchronization raster may support a fast SSB search of the UE because the frequency spacing thereof is configured to be wider than that of the carrier raster.

The UE may acquire an MIB over the PBCH of the SSB. The MIB (master information block) includes minimum information for the UE to receive remaining minimum system information (RMSI) broadcast by the network. In addition, the PBCH may include information on the position of the first DM-RS symbol in the time domain, information for the UE to monitor SIB1 (e.g., SIB1 numerology information, information related to SIB1 CORESET, search space information, PDCCH-related parameter information, etc.), offset information between the common resource block and the SSB (the position of an absolute SSB in the carrier is transmitted via SIB1), and the like. The SIB1 numerology information is also applied to some messages used in the random access procedure for the UE to access the base station after completing the cell search procedure. For example, the numerology information of SIB 1 may be applied to at least one of the messages 1 to 4 for the random access procedure.

The above-mentioned RMSI may mean SIB1 (system information block 1), and SIB1 is broadcast periodically (e.g., 160 ms) in the cell. SIB1 includes information necessary for the UE to perform the initial random access procedure, and SIB1 is periodically transmitted over a PDSCH. In order to receive SIB1, the UE must receive numerology information used for the SIB1 transmission and the CORESET (control resource set) information used for scheduling of SIB1 over a PBCH. The UE identifies scheduling information for SIB1 using SI-RNTI in the CORESET. The UE acquires SIB 1 on the PDSCH according to scheduling information. The remaining SIBs other than SIB1 may be periodically transmitted, or the remaining SIBs may be transmitted according to the request of the UE.

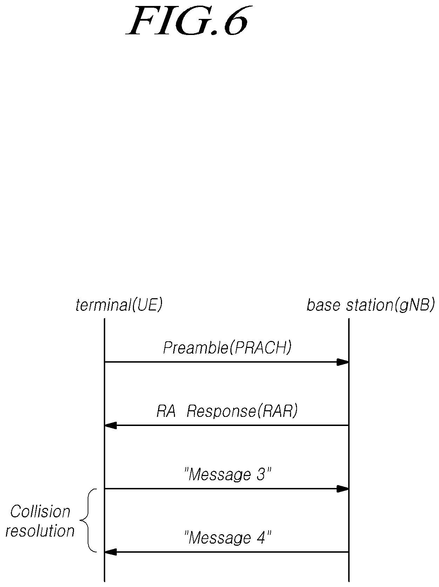

FIG. 6 is a view for explaining a random access procedure in a radio access technology.

Referring to FIG. 6, if a cell search is completed, the UE transmits a random access preamble for random access to the base station. The random access preamble is transmitted over a PRACH. Specifically, the random access preamble is periodically transmitted to the base station over the PRACH that includes consecutive radio resources in a specific slot repeated. In general, a contention-based random access procedure is performed when the UE makes initial access to a cell, and a non-contention-based random access procedure is performed when the UE performs random access for beam failure recovery (BFR).

The UE receives a random access response to the transmitted random access preamble. The random access response may include a random access preamble identifier (ID), UL Grant (uplink radio resource), a temporary C-RNTI (temporary cell-radio network temporary identifier), and a TAC (time alignment command). Since one random access response may include random access response information for one or more UEs, the random access preamble identifier may be included in order to indicate the UE for which the included UL Grant, temporary C-RNTI, and TAC are valid. The random access preamble identifier may be an identifier of the random access preamble received by the base station. The TAC may be included as information for the UE to adjust uplink synchronization. The random access response may be indicated by a random access identifier on the PDCCH, i.e., a random access-radio network temporary identifier (RA-RNTI).

Upon receiving a valid random access response, the UE processes information included in the random access response and performs scheduled transmission to the base station. For example, the UE applies the TAC and stores the temporary C-RNTI. In addition, the UE transmits, to the base station, data stored in the buffer of the UE or newly generated data using the UL Grant. In this case, information for identifying the UE must be included in the data.

Lastly, the UE receives a downlink message to resolve the contention.

### <NR CORESET>

The downlink control channel in NR is transmitted in a CORESET (control resource set) having a length of 1 to 3 symbols, and the downlink control channel transmits uplink/downlink scheduling information, an SFI (slot format index), TPC (transmit power control) information, and the like.

As described above, NR has introduced the concept of CORESET in order to secure the flexibility of a system. The CORESET (control resource set) refers to a time-frequency resource for a downlink control signal. The UE may decode a control channel candidate using one or more search spaces in the CORESET time-frequency resource. CORESET-specific QCL (quasi-colocation) assumption is configured and is used for the purpose of providing information on the characteristics of analogue beam directions, as well as delay spread, Doppler spread, Doppler shift, and an average delay, which are the characteristics assumed by existing QCL.

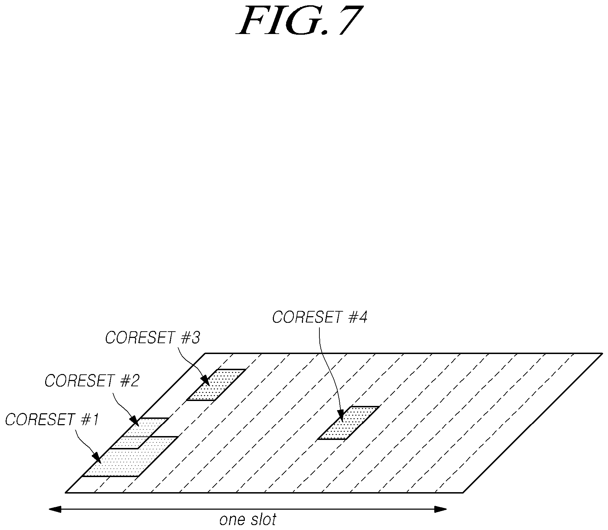

FIG. 7 illustrates CORESET.

Referring to FIG. 7, CORESETs may exist in various forms within a carrier bandwidth in a single slot, and the CORESET may include a maximum of 3 OFDM symbols in the time domain. In addition, the CORESET is defined as a multiple of six resource blocks up to the carrier bandwidth in the frequency domain.

A first CORESET, as a portion of the initial bandwidth part, is designated (e.g., instructed, assigned) through an MIB in order to receive additional configuration information and system information from a network. After establishing a connection with the base station, the UE may receive and configure one or more pieces of CORESET information through RRC signaling.

### Wider bandwidth operations

The typical LTE system supports scalable bandwidth operations for any LTE CC (component carrier). That is, according to a frequency deployment scenario, an LTE provider may configure a bandwidth of a minimum of 1.4 MHz to a maximum of 20 MHz in configuring a single LTE CC, and a normal LTE UE supports a transmission/reception capability of a bandwidth of 20 MHz for a single LTE CC.

However, the NR is designed to support the UE of NR having different transmission/reception bandwidth capabilities over a single wideband NR CC. Accordingly, it is required to configure one or more bandwidth parts (BWPs) including subdivided bandwidths for an NR CC, thereby supporting a flexible and wider bandwidth operation through configuration and activation of different bandwidth parts for respective UEs.

Specifically, one or more bandwidth parts may be configured through a single serving cell configured for a UE in NR, and the UE is defined to activate one downlink (DL) bandwidth part and one uplink (UL) bandwidth part to use the same for uplink/downlink data transmission/reception in the corresponding serving cell. In addition, in the case where a plurality of serving cells is configured for the UE (i.e., the UE to which CA is applied), the UE is also defined to activate one downlink bandwidth part and/or one uplink bandwidth part in each serving cell to use the same for uplink/downlink data transmission/reception by utilizing radio resources of the corresponding serving cell.

Specifically, an initial bandwidth part for an initial access procedure of a UE may be defined in a serving cell; one or more UE-specific bandwidth parts may be configured for each UE through dedicated RRC signaling, and a default bandwidth part for a fallback operation may be defined for each UE.

It is possible to define simultaneously activating and using a plurality of downlink and/or uplink bandwidth parts according to the capability of the UE and the configuration of the bandwidth parts in a serving cell. However, NR rel-15 defined activating and using only one downlink (DL) bandwidth part and one uplink (UL) bandwidth part at a time.

In this specification, a frequency, a frame, a subframe, a resource, a resource block, a region, a band, a subband, a control channel, a data channel, a synchronization signal, various reference signals, various signals, or various messages in relation to NR (New Radio) may be interpreted as meanings used at present or in the past or as various meanings to be used in the future.

In wireless communication systems, in addition to latency, reliability, and availability, the energy efficiency of user equipment (UE) is also a crucial consideration. Currently, a UE may require frequent charging depending on the individual's usage patterns. Design for extending the UE's battery lifetime is essential to enhance energy efficiency and provide a better user experience. Energy efficiency is especially critical for UEs without a stable energy source.

Power consumption may vary depending on the length of a configured wake-up period. However, significant latency may occur, for example, when a large (discontinuous reception) DRX cycle is used to meet battery life requirements. As a result, it may not be suitable for services requiring both a long battery life and low latency.

The UE should wake up periodically once per DRX cycle, which determines power consumption during a period without signal or data traffic. If the UE wake up only when triggered such as by paging, power consumption may be significantly reduced. This may be achieved using a wake-up signal that triggers the main radio and a separate receiver that capable of monitoring the wake-up signal with ultra-low power consumption. The main radio operates for data transmission and reception and may be turned off or set to its maximum power saving mode unless turned on.

The power consumption for monitoring the wake-up signal may vary depending on the design of the wake-up signal and the hardware module of the wake-up receiver used for signal detection and processing.

In this disclosure, the main radio (MR) may refer to a Tx/Rx module, i.e., a transmitter, a receiver, or a transceiver, operating for NR signals/channels in addition to low-power wake-up-related signals/channels. Further, the low-power wake-up receiver (LP-WUR, LR) may refer to an Rx module, i.e., a receiver, that operates to receive/process low-power wake-up-related signals/channels. Further, "MR mode" may refer to performing communication on the main radio, and the LR mode may mean performing communication using the low-power wake-up receiver. Further, the low-power wake-up receiver may be referred to as a low-power receiver. Further, the low-power wake-up signal LP-WUS may be referred to as a wake-up signal in LR mode.

The disclosure proposes an operation method for minimizing the UE's power consumption by setting the main radio (MR) to disable PDCCH monitoring and turning off the DRX on-duration if the low-power receiver (low-power wake-up receiver (LP-WUR), LR), which is separately equipped in the UE with discontinuous reception (DRX) successfully receives and decodes a low-power wake-up signal (LP-WUS) in the DRX cycle in a 3GPP radio access network or next-generation radio access network.

Wake-up signal (WUS) is one of the power saving techniques to reduce the power consumption of the UE by minimizing the transmission/reception operation of the UE. A radio resource control (RRC) paging signal (RRC) transmitted through the physical downlink shared channel (PDSCH) is known as a WUS and serves to wake up the UE in an RRC idle state to prepare for data reception. Through the WUS, the UE may significantly reduce resource consumption, thereby reducing power consumption and extending battery life. Thereafter, the WUS was newly designed for additional power savings for UEs supporting discretionary DRX receipt, including UEs in the RRC connected state. Research is underway to reduce unnecessary power consumption in the legacy connected DRX (C-DRX) operation process. The WUS is intended to inform the UE whether it needs to monitor data scheduling during the on-duration in the next cycle during DRX operation. The UE periodically monitors the physical downlink control channel (PDCCH) during the DRX cycle and, when data accumulates in the buffer, it receives the data through the PDSCH. In this case, the UE may receive the WUS from the base station before monitoring the PDCCH and determine whether to monitor the PDCCH based on the WUS. The WUS includes a one-bit indication to inform whether the UE performs PDCCH monitoring. Therefore, since the UE may wake up and receive data as needed without performing unnecessary monitoring, a power consumption may be reduced.

However, the above-described operation corresponds to a case where the UE operates without a low-power wake-up receiver (LP-WUR), i.e., only using the MR. Further, the legacy eDRX has a trade-off problem between power consumption reduction and latency, which varies based on the length of the UE's wake-up cycle. In other words, when the UE's wake-up cycle is set shorter, data sensing/reception latency decrease, but UE power consumption increases. Conversely, when the wake-up cycle is longer, the UE power consumption decreases, but data sensing/reception latency increases.

To solve this problem, research is being conducted to develop a service that supports a lower latency than eDRX while also reducing the power consumption of the UE. There is ongoing research on a low-power receiver module called the LP-WUR, which can be equipped separately in the UE to receive the LP-WUS transmitted from the base station, identify the wake-up indication information contained in the LP-WUS payload, and then determine whether to wake up the UE MR and monitor the MR PDCCH. Accordingly, studies have been conducted on performance evaluation methods for various aspects, including LP-WUR hardware design, LP-WUS signal design and its impact on power consumption, and scenarios for each of the RRC idle/inactivity/connected states. Thereafter, detailed standards such as the procedures and signaling of LP-WUR/WUS are scheduled to be defined.

As described above, power consumption, latency, and the length of the UE's wake-up cycle are in a trade-off relationship. When the wake-up cycle is set longer, the UE's sleep time increases, reducing power consumption, but higher latency may occur in the DL. Conversely, when the wake-up cycle is set shorter, lower latency in the downlink (DL) may be achieved, but power consumption increases as the UE's sleep time decreases. In other words, whether the UE monitors the PDCCH and its wake-up cycle both significantly affect power consumption.

First, the typical decoding operation for the PDCCH monitoring by the UE in NR is as follows. A search space for PDCCH decoding and monitoring is defined for the UE. This search space indicates which PDCCH the UE should search among the available PDCCH candidate(s) and in which period to search. In other words, the UE performs blind decoding within the defined search space to locate PDCCH data. Each search space set may be configured as a common search space (CSS) or a specific search space (USS). Search spaces for each PDCCH type are divided based on several types of downlink control information (DCI) formats and are constituted of parameters such as (scrambled) SI-RNTI, MCCT-RNTI, G-RNTI, RA-RNTI, C-RNTI, SL-RNTI, and PS-RNTI, which are scrambled along with the DCI format depending on the type. Therefore, the UE performs blind decoding based on the search space corresponding to each USS type or within a PDCCH CSS that is composed of one or more sets.

In the case of typical discontinuous reception (DRX) for UE power saving, setting a long cycle, such as a long DRX cycle, may effectively minimize UE power consumption but is not suitable for services that require low latency. As an example of a low latency service, emergency situations such as fire detection, firewalls for fire containment, and sprinkler operation may be considered. However, typical DRX faces a challenge in meeting latency-sensitive service and requirements. Further, unnecessary power consumption may occur because the UE must periodically monitor the PDCCH regardless of whether data traffic is present.

Specifically, a DRX-applied UE enters either short DRX or long DRX mode when drx-InactivityTimer expires due to the absence of UL/DL data transmission/reception for a certain period of time. When entering the short DRX mode, PDCCH monitoring is performed periodically based on the values of drx-ShortCycle, drx-ShortCycleTimer, drx-SlotOffset, and drx-onDurationTimer. If there is no UL/DL data transmission/reception during drx-ShortCycleTimer, PDCCH monitoring is performed by applying drx-StartOffset and drx-LongCylceStartOffset values. The maximum time for drx-LongCylceStartOffset is 10,240 ms.

As a DRX enhancement technology, the introduced WUS, or DCP (DCI with CRC scrambled by PS-RNTI) technology allows the base station to transmit a one bit indication to inform the UE that is periodically monitoring the PDCCH whether it should wake up. The UE configured with DRX mode receives DCI format 2_6 through PDCCH monitoring. The UE receiving the indication bit '0' does not wake up and does not start the drx-onDurationTimer during the next DRX cycle. On the other hand, the UE receiving the bit '1' wakes up and performs PDCCH monitoring by starting the drx-onDurationTimer during the next DRX cycle. In other words, the UE may perform ON/OFF switching through the WUS indicator to determine whether the DRX should be in on-duration, thus reducing power consumption during periods when the on-duration is off.

Specifically, the UE's PDCCH monitoring is operated by the type3-PDCCH CSS-based search space scrambled with DCI format 2_6 and PS-RNTI. In other words, if the UE detects DCI format 2_6 after receiving the search space set for PDCCH monitoring from the base station to detect DCI format 2_6 in the active downlink bandwidth part (active DL BWP) of PCell or SpCell, the UE's physical layer reports the wake-up indication bit to the higher layer. In this case, if the wake-up indication bit is '1', the drx-onDurationTimer is started to perform PDCCH monitoring, and if it is '0', drx-onDurationTimer is not started, and monitoring is not performed. On the other hand, if DCI format 2_6 is not detected, the UE's physical layer does not report the wake-up indication bit to the higher layer, causing PDCCH monitoring to be performed immediately. In the above-described operation, the UE should continuously perform PDCCH/DCI blind decoding within the pre-defined range or search space, and if decoding fails, it continues blind decoding in the next duration.

Further, search space set group (SSSG) switching and PDCCH monitoring skipping techniques have been newly introduced to improve power consumption of RRC-Connected mode UEs. SSSG switching supports up to three SSSGs (searchSpaceGroupIdList), and supports switching operations based on DCI indication (DCI format 2_0) from base station or SSSG timer (searchSpaceSwitchTimer). PDCCH skipping is a method in which the base station dynamically instructs the UE to skip the PDCCH monitoring operation through DCI during the skipping duration (pdcch-SkippingDurationList). SSSG switching and PDCCH skipping may operate together or separately depending on the RRC settings. The detailed operation of these two techniques is indicated by a PDCCH monitoring adaptation field, which contains a one- bit or two- bits within DCI format 0_1/0 2/0 3/1_1/1 2/1 3, which is the scheduling DCI. Accordingly, power consumption of the UE may be reduced by reducing the PDCCH monitoring period and time.

However, the above-described DRX (short DRX, long DRX), WUS (DCP), SSSG switching, and PDCCH skipping techniques operate based on MR PDCCH signaling. Since the dynamic configuration and indication information for applying WUS, SSSG switching, and PDCCH skipping must be received through the DCI, the UE must perform PDCCH monitoring after turning on. In other words, since it functions as an MR-only UE, without LR capability, there is a limit to power consumption reduction. Additionally, high-latency issues may occur if a long DRX cycle, extended wake-up cycle, or frequent PDCCH monitoring skipping is set to reduce power consumption. Therefore, a solution is needed to simultaneously reduce power consumption and achieve low latency.

Research is being conducted to simultaneously meet both low latency and the low power requirements for the UE. Unnecessary power consumption occurs because the UE periodically turn-on or wake-up every DRX cycle, even when there is no data traffic. If the UE performs turn-on or wake-up and PDCCH monitoring only when traffic is generated, power consumption may be further reduced. To support the above-described operations, work is underway on an LR (low-power wake-up receiver (LP-WUR)) which is a separate ultra low-power receiver capable of monitoring and receiving/detecting/processing only essential signals related to the low-power wake-up signal (LP-WUS). The LP-WUS may trigger the turn on or wake up of the main radio (MR), which is a legacy transceiver. The LR refers to an ultra-low-power receiver mounted separately on the UE. Research is being conducted to define the hardware architecture for the receiver, the L1 procedure for supporting LP-WUS transmission/reception, and higher layer protocol operation. The LR has significantly lower basic power consumption than the MR because it is a receive-only hardware module, minimally designed for lower implementation complexity and a smaller form factor than the MR.

Here, the MR corresponds to the UE's transceiver (MR tx/rx module), which may transmit/receive NR signal/channel. The MR turns on/wakes up when the LR, upon receiving the LP-WUS, triggers it. Conversely, when not triggered, it turns off and enters (ultra-deep/deep/light/micro) sleep mode, minimizing power consumption. In other words, when the MR enters the sleep mode or LR mode, the typical MR is turned off, and the LR is activated to receive receive only LP-WUS and other essential signals, drastically reducing UE power consumption. In this case, the UE receiving the LP-WUS through the LR may be instructed to switch to MR mode. The UE then switches to the MR mode, turning on/waking up the MR to perform PDCCH monitoring for the typical NR data transmission/reception.

Meanwhile, according to the UE's RRC state (RRC-IDLE/INACTIVE, RRC-CONNECTED mode), the contents to be loaded on the LP-WUS payload is under discussion. UE-group, UE-subgroup, and UE-ID are considered as units of users to be addressed through the LP-WUS. Regarding additional information to be included in the LP-WUS, in the case of RRC-IDLE/INACTIVE mode, a method to minimize power consumption by optimizing the UE's MR turn-on/off is being discussed. This optimization considers various factors, such as cell information, system information (SI), tracking area identifier (TAI), and RAN area information. For RRC-CONNECTED, a wake-up indication method for PDCCH monitoring is under discussion.

A metric related to radio resource management (RRM) measurement is being discussed to improve LP-WUS reception and detection performance of the LR in the UE. Examples of measurement metrics include signal quality, signal power, and detection rate of LP-WUS/synch signals. Further, reference signals for the LR to perform RRM measurement of the serving cell are also being discussed. Examples include LP-RSSI, LP-RSRP, LP-SINR, and LP-RSRQ. In the RRC-IDLE/INACTIVATE mode, research is planned to determine whether the LR may perform at least RRM measurement of serving/camping cells as a means of reducing UE power consumption due to legacy MR RRM measurement. In other words, to relax RRM measurement requirements for serving/neighboring cells, which are normally performed by the MR, work will focus on the offloading function where the LR performs serving cell RRM measurement under certain conditions. In the RRC-CONNECTED mode, the MR typically performs RRM measurement, however plans to allow RRM measurement by the LR will also be discussed.

Meanwhile, an LR synchronization process for LP-WUS reception is required, and the following three options are considered. In the case of Option 2, a separate periodic signal such as a low-power synchronization signal (LP-SS) should be designed. If the LR cannot receive the legacy PSS/SSS signal, the LP-SS will be used for time/frequency synchronization of the LR. The system overhead of the LP-SS may be determined based on factors such as periodicity, system bandwidth (system BW), number of beams, and required resources. In particular, the LP-SS coverage area should be designed to match or exceed the LP-WUS coverage area. If the LR is capable of receiving the legacy PSS/SSS, synchronization may be performed using the PSS/SSS.
- Option 1. Non-periodic signals transmitted in LP-WUS
- Option 2. Periodic signals transmitted separately from LP-WUS
- Option 3. Option 1 + Option 2

The LR, which performs LP-WUS monitoring, is being considered for operation under the following two options. In Option 1, the LR is periodically turned on/off to perform LP-WUS monitoring, requiring synchronization via synchronization signals for LP-WUS reception. In Option 2, the LR remains always on to monitor the LP-WUS, eliminating the need for synchronization through the LP-SS signal.
- Option 1: duty cycle, LP-WUR switched between ON/OFF states
- Option 2: Continuous monitoring, which corresponds to LP-WUR being always ON

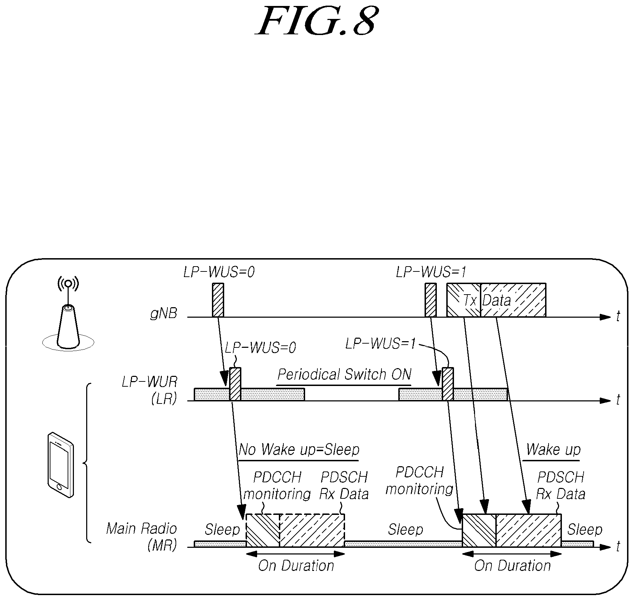

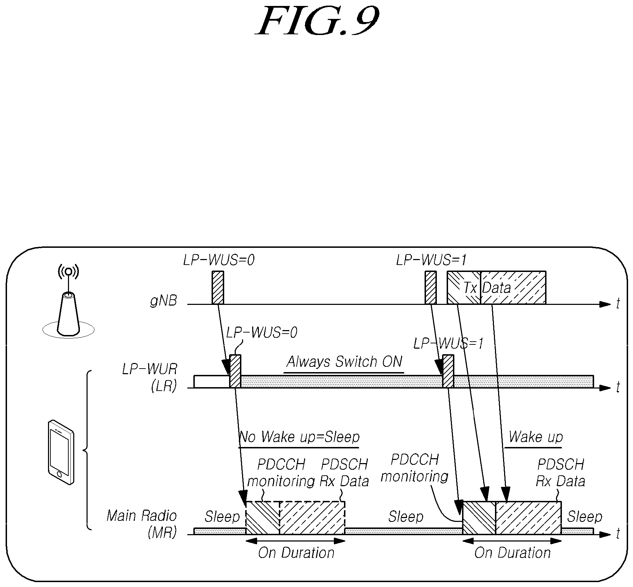

FIGS. 8 and 9 illustrate LP-WUS monitoring and reception and a sleep and PDCCH monitoring operation of an MR according to an ON/OFF option of an LR switch separately equipped in a UE in an RRC-Connected mode. In FIG. 8, the LR turns on/off based on the duty cycle to monitor the LP-WUS. If the wake-up indication bit for MR PDCCH monitoring in LP-WUS is '0', the MR does not wake up, remains in the sleep state, and does not perform PDCCH monitoring. When DL data traffic is present, the base station sets the wake-up indication bit to "1," loads it into the LP-WUS, and transmits it to the LR.. Upon receiving the wake-up indication bit, the LR wakes up the MR, instructs PDCCH monitoring, and then receives the PDSCH. In FIG. 9, the LR remains always on to perform LP-WUS monitoring, and the subsequent operations are identical to those in FIG. 8.

Meanwhile, discussions on activation/deactivation (activation/deactivation) procedures for LP-WUS monitoring by LR are also underway. In the case of RRC-IDLE/INACTIVE mode, three options are being considered: Alt 1a, Alt 1b, and Alt 2. In Alt 1a and 1b, the base station may transmit the legacy paging indication and the LP-WUS, operating based on coverage and channel conditions. However, Alt 1a is a UE implementation issue, whereas Alt 1b performs activation/deactivation based on preset criteria. In Alt 2, the activation/deactivation instruction for LP-WUS monitoring in the cell operates based on signaling. In RRC-Connected mode, LP-WUS monitoring activation/deactivation may be performed under gNB RRC signaling, gNB L1/L2 signaling, and pre-configured conditions (e.g., Timer). Further discussions will be made on whether the base station should be transparently aware of the activation/deactivation state.

There is also a discussion on enhancing the coverage performance of LP-WUS. The trade-offs between the gain and system overhead of the LP-WUS signal, which is designed to minimize UE power consumption of the UE, as well as the impact on network power consumption due to increased complexity, should be considered. In particular, if the channel state of LP-WUS is poor, or if the signal quality or strength of LP-WUS/LP-SS falls below a threshold, preventing the LR from receiving/detecting the above-described signal, a study will be conducted on the detailed fallback operation of switching to the legacy the MR-centered operation. Further, studies will focus on low complexity channel coding methods, time/frequency repetitive transmission, frequency hopping, and diversity techniques to enhance LP-WUS coverage performance.

For LP-WUS/WUR support, discussions are being held from a higher layer perspective for each of the RRC-IDLE/INACTIVE and RRC-CONNECTED modes. A UE in RRC-CONNECTED mode with legacy DRX configured must maintain PDCCH monitoring during the C-DRX active time, even when there is no scheduled data, leading to unnecessary power consumption. Legacy power saving techniques that aim to reduce power consumption by minimizing unnecessary PDCCH monitoring time include short C-DRX, long C-DRX, PDCCH-based WUS, and PDCCH monitor adaptation. However, all of these techniques operate based on PDCCH based signaling, which limits their effectiveness in reducing power consumption.

However, for UEs equipped with the LR, the MR may remain in the sleep state while the LR stay in the active state for monitoring the LP-WUS. The MR wakes up to monitor the PDCCH only when the LR receives the LP-WUS. Since the LR is designed to operate with minimal power consumption, its power usage is expected to be significantly lower than that of the MR, which relies on legacy PDCCH based signaling-based power saving technique. Therefore, in RRC-CONNECTED mode, a UE supporting the LP-WUS may monitor the DL through the LR, allowing the MR to remain in the sleep state for a longer time before performing PDCCH monitoring, thereby potentially reducing overall UE's power consumption. Further, since RRC-CONNECTED mode is more latency-sensitive compared to RRC-IDLE/INACTIVE, research is needed to balance power consumption reduction with latency performance. As a result, the energy-saving potential of a UE enabled with LP-WUS/WUR will depend on the duration for which the MR may remain in the sleep state.

As described above regarding LP-WUS monitoring, the LR has a 'duty-cycled' mode, in which it periodically monitors the LP-WUS, similar to DRX operation, and a 'continuous' mode, in which the LR remains ON to monitor the LP-WUS continuously. The 'continuous' mode is expected to have low latency compared to the 'duty-cycled' mode. However, since the cycle length of the 'duty-cycled' mode is defined or configured based on DL latency requirements, both modes will have a low latency bound. Therefore, the performance comparison between the two LP-WUS monitoring modes, or the selection between them, should be considered based on DL latency requirements.

The LP-WUS/WUR aims to minimize UE power consumption while ensuring PDCCH monitoring and low latency. The basic operation is that when the MR is in the sleep state, the LR remains in the active state to monitor the LP-WUS. If the LR receives the LP-WUS, it wakes up the MR and triggers it to perform PDCCH monitoring.

The current standard considers a scenario for interworking between the LP-WUS/WUR technique and legacy Rel-15/16/17 UE power saving technique. The LP-WUS operation for RRC-CONNECTED UE should be enhanced when replacing legacy techniques such as DRX, PDCCH-based WUS (DCP), PDCCH skipping, and SSSG switching or when setting up them alongside the LP-WUS. For example, PDCCH-based WUS is an enhancement technique of long C-DRX. Below is an example of the LP-WUS operation option for an RRC-CONNECTED UE supporting legacy power saving techniques discussed in the standard so far.

**[Table 2]**

| LP-WUS application direction | details | PDCCH monitoring start condition | PDCCH monitoring stop condition |
|---|---|---|---|
| Direction 1: LP-WUS monitoring time is defined based on C-DRX-related timer | Option 1: perform LP-WUS monitoring before drx-onDuratio nTimer (similar to Rel-16 DCP) | when LP-WUS (including UE or UE-subgroup) is detected; and drx-onDurationTimer starts | when C-DRX timer expires (e.g., drx-onDurationTimer) or; when Rel-17 PDCCH skipping indication is received |
| | Option 2: perform LP-WUS monitoring at any time other than DRX active time | when LP-WUS (including UE or UE-subgroup) is detected | |
| Direction 2: LP-WUS monitoring time is defined regardless of C-DRX-related timer | Option 4: perform LP-WUS monitoring at any time regardless of DRX setting | | |
| Direction 3: LP-WUS signal operates transparently to MAC operation. | LP-WUS monitoring time is determined based on PHY layer design, and there is no MAC impact. | N/A | N/A |

In Table 2 above, Direction 1 refers to a case where LP-WUS monitoring operates alongside C-DRX, with the LP-WUS monitoring occasion set based on C-DRX-related timers. Option 1 functions similarly to the aforementioned DCP because the LP-WUS monitoring occasion is fixed before the start of the C-DRX, i.e., just before the drx-onDuration Timer, to indicate whether the drx-onDuration Timer starts. However, a transition time offset of a sufficient duration must be set to allow the MR to wake up from sleep mode after the LP-WUS reception/detection. The MR PDCCH monitoring begins at the start time of drx-onDurationTimer after the LP-WUS detection.

Option 2 refers to a case where the LP-WUS monitoring occasion is positioned at any time outside the C-DRX active time. The C-DRX active time refers to the MR active period, which is triggered by the LR upon successful LP-WUS detection. Additionally, it may refer to the MR active period triggered by successful MR PDCCH monitoring and detection during the drx-onDurationTimer duration or the time period when the drx-InactivityTimer is active. The start condition for the MR PDCCH monitoring by the LR is successful LP-WUS detection.

In Table 2 above, Direction 2 refers to a case where the LP-WUS/WUR may operate either alongside C-DRX or independently, with the LP-WUS monitoring occasion set regardless of C-DRX-related timers. In Option 4, when the LP-WUS detection by the LR is successful, the LR instructs the MR to start/restart PDCCH monitoring. The difference from Option 2 is that the LP-WUS monitoring may be performed even during the DRX active time period. PDCCH monitoring adaptation technique, such as skipping or SSSG switching, may be applied with the LP-WUS to stop MR PDCCH monitoring.

Table 3 below summarizes the advantages and disadvantages of Options 1, 2, and 4. Table 3 outlines advantages and disadvantages, limitations, and additional matters related to the interworking operation between typical UE power saving techniques and the LP-WUS/WUR technique.

**[Table 3]**

| LP-WUS options | Advantages | disadvantages |
|---|---|---|
| Option 1 | -Large power savings compared to DCP (because LP-WUS monitoring consumes less power than PDCCH monitoring) | -Has a duplicate mechanism for the same purpose as DCP |
| | | -There is a limitation that the WUR duty-cycle for LP-WUS monitoring should be set to match the C-DRX cycle length and on-duration. |
| | -Since DCP function is reused, lower specification impact and complexity are expected compared to Option 2. | |
| Option 2 | -Large power savings compared to C-DRX- LP-WUS settings are flexible compared to Option 1 (because LP-WUS monitoring occasions may be set regardless of the C-DRX cycle) | -High complexity: Need to study interlocking operation method with C-DRX |
| | | -Much specification impact: A new PDCCH monitoring scheme is needed (a separate WUR duty-cycle or WUR-specific on-duration timer other than the C-DRX cycle needs to be introduced) |
| | -Reduced DL latency compared with Option 1 and C-DRX (when the WUR duty-cycle period is set to be shorter than the long C-DRX cycle or when applying WUR continuous mode) | |
| Option 4 | -Large power savings compared to C-DRX/DCP (because LP-WUS monitoring consumes less power than PDCCH monitoring)- LP-WUS settings are the most flexible compared to the other options | -High complexity: Need to discuss how to set up the LP-WUS monitoring occlusion and stop the MR PDCCH monitoring |
| | -Reduced DL latency compared to C-DRX | |

As described above, discussions on the interworking operation between typical power saving technique and the LP-WUS/WUR technique are ongoing, but specific procedures and operations have not been defined. For example, while the drx-onDurationTimer is in operation, the MR wakes up and performs PDCCH monitoring. However, it has not yet been determined whether the LR should perform LP-WUS monitoring o during the on-duration period. In other words, it is necessary to define the start and end times for the LP-WUS monitoring occlusions, considering the DRX cycle. Additionally, it must be determined whether a UE enabled with LP-WUS/WUR should perform MR PDCCH monitoring during DRX-on-duration. Furthermore, discussions are underway on defining the activation/deactivation operations and timing for typical techniques such as PDCCH skipping and SSSG switching.

Typical LP-WUS/WUR and DRX-enabled UEs perform duplicate MR wake-up and PDCCH monitoring operations due to the DRX-on-duration cycle and the LR's LP-WUS detection, leading to unnecessary power consumption for the UE. For example, assuming a 15 kHz SCS constituted of 10 subframes/slots within one radio frame, the base station may set the LP-WUS monitoring occasion in slot 1 and DRX on-duration in slots 8 to 10 for the UE. In this case, when the LR successfully receives/detects the LP-WUS, it triggers the MR to wake up, receive the PDCCH/PDSCH, and then, return to the sleep state. However, the UE will then wake-up the MR again in slots 8 to 10 for PDCCH monitoring, as set by the DRX on-duration the same radio frame. In other words, PDCCH monitoring occurs twice within one radio frame, resulting in unnecessary power consumption due to duplicate monitoring operations.

The disclosure aims to reduce unnecessary power consumption in a UE that supports both LP-WUR/WUS and the typical DRX function. This power inefficiency occurs when the UE performs multiple MR wake0ups and PDCCH monitoring due to both the DRX on-duration setting and LP-WUS reception success.

Specifically, the goal is to reduce unnecessary power consumption caused by consecutive MR wake-up operations. This occurs when the LR successfully receives/detects the LP-WUS, triggers MR wake-up and PDCCH monitoring, and then performs another MR wake-up and PDCCH monitoring based on the configured DRX-on-duration cycle within one radio frame. Therefore, a procedure is proposed to limit the MR PDCCH monitoring operations triggered by the DRX-on-duration cycle when the LR successfully receives/detects the LP-WUS within one radio frame.

Hereinafter, a method for performing wireless communication using a low-power receiver will be described in detail with reference to related drawings.

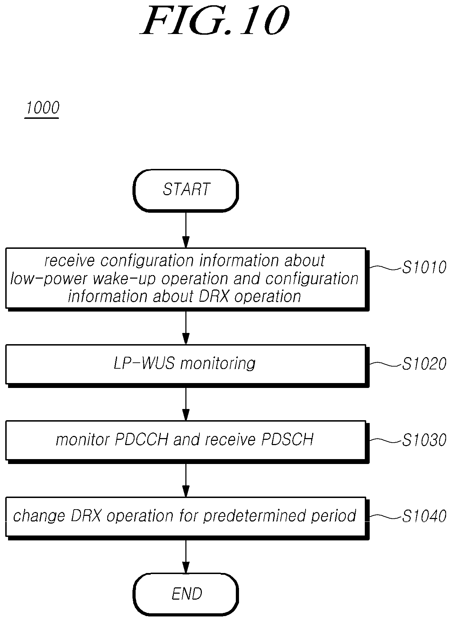

FIG. 10 is a flowchart illustrating a procedure 1000 for a UE to perform wireless communication using a low-power receiver according to an embodiment.

Referring to FIG. 10, the UE may receive configuration information including i) configuration information about a low-power wakeup operation and ii) configuration information about a discrete reception (DRX) operation (S1010).

According to an example, the UE may receive setting information including configuration information about a low-power wake-up operation and configuration information about a DRX operation through higher layer signaling such as RRC signaling. Each of the configuration information included in the setting information is not limited to the specific terminology used in this disclosure, but may also be referred to by different names when configured with substantially the same content.

The configuration information about the low-power wake-up operation may include configuration information used to perform the low-power wake-up operation. The configuration information about the low-power wake-up operation may include monitoring period or monitoring occlusion information about the wake-up signal in the LR mode, PDCCH monitoring information in the MR mode, setting information for switching between modes, or other related parameters. Further, the configuration information about the low-power wake-up operation may include information for configuring the wake-up signal (LP-WUS). Moreover, the configuration information about the low-power wake-up operation may include configuration information about other operations of the low-power receiver (LP-WUR, LR).

The configuration information for the DRX operation may include configuration information necessary to perform the DRX operation. In particular, the configuration information about the DRX operation in the embodiment of the disclosure may include configuration information (e.g., settings) for changing (e.g., modifying) the legacy DRX operation based on the low-power wake-up operation. The configuration information for the DRX operation may include i) information for not starting or stopping the DRX on-duration timer (drx-onDurationTimer) for the DRX operation set for the UE, ii) information for skipping PDCCH monitoring, iii) information for applying SSSG switching, or other related information.

Specifically, the setting information may include synchronization signal (low power synchronization signal, LP-SS) information to enable synchronization between the low-power receiver and the base station, considering the wake-up signal monitoring operation of the duty-cycled low-power receiver, which operates by turning on/off.

Further, the configuration information may include the wake-up signal monitoring occasion (LP-WUS monitoring occasion information), which includes information on the cycle in which the LR, operating in duty-cycle mode, monitors the LP-WUS. According to an embodiment, the wake-up signal monitoring occasion may be set within a predetermined period or may be set based on a DRX cycle. For example, it may be configured to monitor the wake-up signal in a first subframe or slot per radio frame. In this case, in the DRX operation, 8th slot to 10th slot per radio frame may be set as the DRX on-duration for monitoring the PDCCH. However, this is merely an example, and the embodiments of the disclosure are not limited thereto. The monitoring occasion and DRX on-duration of the wake-up signal may be set differently as long as the technical principles of this disclosure are maintained.

Further, the setting information may include low-power receiver inactivity timer (WUR inactivity timer) information about the low-power receiver. The WUR inactivity timer is a timer that starts after the low-power receiver detects a wake-up signal and the MR receives PDCCH or PDSCH data. This timer is reset or initialized to (re)start whenever the UE receives data. While the timer is in operation, the MR maintains the active state to continuously monitor PDCCH, and the LR maintains the inactive (sleep) state. When the timer expires, the MR enters the inactive state and the LR transitions to the active state to resume wake-up signal monitoring.

Further, the setting information may include the MR PDCCH monitoring window information, which is triggered by the low-power receiver. The PDCCH monitoring window may be configured to define the duration or the number of subframes or slots in which the MR monitors the PDCCH after a wake-up signal is detected by the low-power receiver.

Further, when a wake-up signal is detected by the low-power receiver, the setting information may include information (e.g., instructions) to stop the drx-onDurationTimer, which monitors the PDCCH during DRX on-duration. The stop of the drx-onDurationTimer may be maintained until i) the radio frame in which the reception of PDCCH/PDSCH data is completed or ii) until there is a (re)start instruction of the drx-onDurationTimer. If the drx-onDurationTimer has not yet started, the stop of the drx-onDurationTimer may be applied by preventing the drx-onDurationTimer from starting.

Further, the setting information may include information (e.g., instructions) for skipping PDCCH monitoring during the DRX on-duration when a wake-up signal is detected by the low-power receiver. This assumes a scenario where the PDCCH monitoring skip is configured in the UE in relation to the DRX operation. The PDCCH monitoring skip may be maintained i) until the radio frame in which PDCCH/PDSCH data reception is completed or ii) until the frame in which the WUR inactivity timer expires.

Further, the above-described setting information may include information (e.g., instruction) for applying SSSG switching during DRX on-duration when a wake-up signal is detected by the low-power receiver. This assumes a scenario where SSSG switching is configured in the UE in relation to the DRX operation. The SSSG switching may be maintained i) until the radio frame in which PDCCH/PDSCH data reception is completed or ii) until the frame in which the WUR inactivity timer has expired.

Further, the setting information may include instruction information (e.g., instructions) to stop the drx-onDurationTimer set in the corresponding radio frame when the WUR inactivity timer expires. Additionally, the setting information may include information instructing (re)starting of the drx-onDurationTimer from the next radio frame after the WUR inactivity timer expires. Moreover, the setting information may include information that instructs the low-power receiver to (re)activate or (re)start wake-up signal monitoring when the WUR inactivity timer expires.

According to an embodiment, the setting information may be received through at least one of higher layer signaling and a wake-up signal. In other words, part or all of the setting information may be included in the payload of the wake-up signal and received accordingly. This is described in detail below.

Referring back to FIG. 10, the UE may monitor a wake-up signal (low-power wake-up signal, LP-WUS) through the low-power receiver based on setting information (S1020).

The UE may switch to the LR mode based on the configuration information for the low-power wake-up operation included in the setting information. According to an embodiment, upon receiving an instruction from base station to switch to the LR mode, the UE may monitor whether the wake-up signal is transmitted from the base station through the low-power receiver corresponding to the LR. Alternatively, according to another embodiment, if a timer associated with switching to the LR mode is configured, the UE may switch to the LR mode according to the timer setting.

When switching to the LR mode, the UE may monitor the wake-up signal through the low-power receiver without performing wireless communication via the MR. Based on the configuration information for the low-power wake-up operation, the UE may monitor the wake-up signal in the radio resource allocated for wake-up signal monitoring occasions until the wake-up signal is received.

As described above, at least a part of the setting information may be included in the payload of the wake-up signal to modify the DRX operation according to the detection of the wake-up signal. A combination of one or more of the following pieces of information may be included.

The setting information may include information for stopping the drx-onDurationTimer. The information may be configured to be applied when a wake-up signal is detected in the low-power receiver, or when the WUR inactivity timer expires.

Further, the setting information may include information for (re)starting the drx-onDurationTimer. The information may be configured to be applied from the next radio frame after the end of the reception of the PDCCH/PDSCH data of the MR, or from the next radio frame after the expiration of the WUR inactivity timer.

In addition, the setting information may include information for applying SSSG switching in DRX on-duration. Alternatively, the setting information may include information for skipping PDCCH monitoring in the DRX-on-duration period.

Moreover, the setting information may include information and a time for (re)activating wake-up signal monitoring of the low-power receiver. In this case, the information may be configured to be applied at the end of the reception of PDCCH/PDSCH data of the MR or at the expiration of the WUR inactivity timer.

Referring back to FIG. 10, if the wake-up signal is received, the UE may monitor the downlink control channel (PDCCH) through the transceiver and receive the downlink data channel (PDSCH) according to the reception of the downlink control channel (S1030).

When the wake-up signal is received, the UE may deactivate the low-power receiver and activate the transceiver to switch to the MR mode for performing wireless communication. As in a normal case, the UE may monitor the downlink control channel including the scheduling information and identify the downlink control information included in the received downlink control channel. The UE may receive the downlink data channel based on the scheduling information included in the downlink control information.

Referring back to FIG. 10, the UE may change the DRX operation for a predetermined period based on the setting information (S1040).

As described above, the UE detecting the wake-up signal may modify the DRX operation based on setting information received through higher layer signaling or setting information included in the payload of the wake-up signal. In other words, the UE may adjust its the operation during the DRX on-duration and transmit the corresponding change to at least one of the base station and the network.

According to an embodiment, the predetermined period may be set as one or more radio frames. Alternatively, the predetermined period may be set as one cycle based on the DRX cycle. This is merely an example, and the configuration is not limited to a specific period, as long as the wake-up signal monitoring occasion and DRX on-duration are included within a predetermined period. For example, the wake-up signal may be configured to be monitored in the first subframe or slot per radio frame, while slot 8 to slot 10 per radio frame may be set as the DRX on-duration.

According to an embodiment, the UE may be configured to change the DRX operation when a wake-up signal is detected based on the setting information. In other words, when the wake-up signal is detected, the UE may stop the drx-onDurationTimer. Further, the UE may apply SSSG switching in DRX on-duration or skip PDCCH monitoring in DRX on-duration. In this case, the UE may be configured to change the DRX operation in the radio frame or DRX cycle in which the wake-up signal is detected based on the above-described setting information before the reception of the PDCCH and PDSCH in step S 1030.

According to another embodiment, the UE may be configured to modify the DRX operation based on at least one of the reception completion time of the downlink data channel, the end time of the PDCCH monitoring window, and the expiration time of the WUR inactivity timer based on the setting information. In other words, when reception of the downlink data channel is completed, the UE may stop the drx-onDurationTimer. Alternatively, when the PDCCH monitoring window for monitoring the downlink control channel is terminated, the UE may stop the drx-onDurationTimer. Alternatively, when the WUR inactivity timer expires, the UE may stop the drx-onDurationTimer. Further, in each case, the UE may apply pre-configured SSSG switching in DRX on-duration or skip pre-configured PDCCH monitoring.

In this case, according to an embodiment, when the reception completion time of the downlink data channel, the end time of the PDCCH monitoring window, or the expiration time of the WUR inactivity timer is before DRX on-duration within the predetermined period, the UE may be configured not to start the drx-onDurationTimer for the DRX on-duration. Further, the UE may apply SSSG switching or skip PDCCH monitoring in the corresponding DRX on-duration.

According to another embodiment, if the reception completion time of the downlink data channel, the end time of the PDCCH monitoring window, or the expiration time of the WUR inactivity timer is during DRX on-duration within the predetermined period, the UE may stop the drx-onDurationTimer for the DRX on-duration. Further, the UE may apply SSSG switching or skip PDCCH monitoring in the corresponding DRX on-duration.

According to further another embodiment, if the reception completion time of the downlink data channel, the end time of the PDCCH monitoring window, or the expiration time of the WUR inactivity timer is after the predetermined period, the UE may not start or may stop the drx-onDurationTimer for DRX on-duration within the period that includes the reception completion time of the downlink data channel, the end time of the PDCCH monitoring window, or the expiration time of the WUR inactivity timer. In other words, as described above, when the predetermined period is one radio frame, if a wake-up signal is detected in the first radio frame, and when the reception completion time of the downlink data channel, the end time of the PDCCH monitoring window, or the expiration time of the WUR inactivity timer is within the second radio frame, the drx-onDurationTimer for DRX on-duration configured in the second radio frame may not be started or may be stopped. In this case, if the reception completion time of the downlink data channel, the end time of the PDCCH monitoring window, or the expiration time of the WUR inactivity timer is before the DRX on-duration, the UE may not start the drx-onDurationTimer, but if the reception completion time of the downlink data channel, the end time of the PDCCH monitoring window, or the expiration time of the WUR inactivity timer is during the DRX on-duration, the UE may stop the drx-onDurationTimer. Further, the UE may apply SSSG switching or skip PDCCH monitoring in the corresponding DRX on-duration.

According to the embodiments described above, wireless communication is performed using a low-power receiver capable of performing a wake-up operation with minimal power consumption. Additionally, the UE's power consumption may be further reduced by limiting unnecessary MR wakes ups, which may occur du to both a preset DRX on-duration and the detection of a low-power wake-up signal in a UE that simultaneously supports a low-power wake-up operation and DRX.

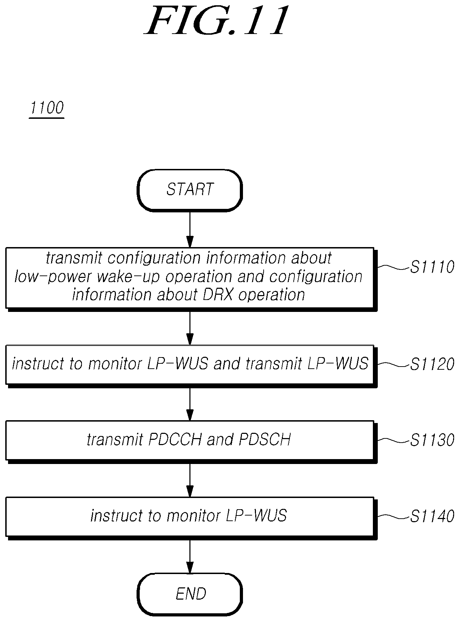

FIG. 11 is a flowchart illustrating a procedure 1100 of a base station for controlling an operation of a UE performing wireless communication using a low-power receiver according to an embodiment. The description provided in connection with FIG. 10 may be omitted to avoid redundancy. In such cases, the omitted content may still be applied in substantially the same manner, as long as it does not contradict the technical spirit of the disclosure.

Referring to FIG. 11, the base station may transmit configuration information including i)_configuration information about a low-power wakeup operation and ii) configuration information about a discrete reception (DRX) operation (S1110).

According to an embodiment, the base station may transmit setting information (e.g., configuration information) including configuration information about a low-power wake-up operation and configuration information about a DRX operation through higher layer signaling such as RRC signaling.

The configuration information on the low-power wake-up operation may include configuration information used to perform the low-power wake-up operation. The configuration information about the low-power wake-up operation may include monitoring period or monitoring occlusion information about the wake-up signal in the LR mode, PDCCH monitoring information in the MR mode, setting information for switching between modes, or other related information. Further, the configuration information on the low-power wake-up operation may include information configuring the wake-up signal (LP-WUS). Moreover, the configuration information about the low-power wake-up operation may include configuration information about other operations of the low-power receiver (LP-WUR, LR).

The configuration information on the DRX operation may include configuration information used to perform the DRX operation. In particular, the configuration information for the DRX operation in the embodiment of the disclosure may include configuration information for changing (e.g., modifying or adjusting) the legacy DRX operation according to the low-power wake-up operation. The configuration information on the DRX operation may include information for not starting or stopping the DRX on-duration timer (drx-onDurationTimer) for the DRX operation set for the UE, information for skipping PDCCH monitoring, information for applying SSSG switching, or other related information. The specific information has been described above in connection with FIG. 10, and no duplicate description thereof is given below.

According to an embodiment, the setting information may be received through at least one of higher layer signaling and a wake-up signal. In other words, at least part of the setting information may be included in the payload of the wake-up signal and received. This is described in detail below.

Referring back to FIG. 11, if downlink data to be transmitted to the UE is identified, the base station may transmit a wake-up signal (WUS) to the UE based on the configuration information (S 1120).

The UE may transits to the LR mode based on the configuration information about the low-power wake-up operation included in the setting information. According to an embodiment, when receiving an instruction from the base station to switch to the LR mode, the UE may monitor whether the wake-up signal is transmitted from the base station through the low-power receiver corresponding to the LR. Alternatively, according to another embodiment, when a timer associated with switching to the LR mode is configured, the UE may switch to the LR mode according to the setting of the timer.

If switching to the LR mode, the UE may monitor the wake-up signal through the low-power receiver without performing wireless communication according to the MR. Based on the configuration information for the low-power wake-up operation, the UE may monitor the wake-up signal in the radio resource allocated as a wake-up signal monitoring occasion until the wake-up signal is received.

As described above, at least part of the setting information may be included in the payload of the wake-up signal to modify the DRX operation based on the detection of the wake-up signal. The specific information contained in the payload of the wake-up signal has already been described in connection with FIG. 10, and to avoid redundancy, it will not be repeated below.

Referring back to FIG. 11, the base station may transmit a downlink control channel (PDCCH) and a downlink data channel (PDSCH) (S1130).

When the wake-up signal is received from the UE, the base station may transmit a downlink control channel including scheduling information to the UE as in a normal case. The base station may transmit the downlink data channel based on the scheduling information about the downlink control information included in the downlink control channel.

Referring back to FIG. 11, the base station may instruct the UE to restart the wake-up signal monitoring based on the setting information (S 1140).

As described above, the UE detecting the wake-up signal may change (e.g., modify) the DRX operation based on setting information received through higher layer signaling or setting information included in the payload of the wake-up signal. In other words, the UE may change the operation in the DRX on-duration and may transmit the corresponding change to at least one of the base station and the network.

According to an embodiment, the predetermined period may be set as one or more radio frames. Alternatively, the predetermined period may be set as one cycle according to the DRX cycle. This is merely an example and is not limited to a specific period, as long as the wake-up signal monitoring occasion and DRX on-duration are included within a predetermined period.

According to an embodiment, the setting information may be configured for the UE to change the DRX operation when a wake-up signal is detected. In other words, when the wake-up signal is detected, the UE may stop the drx-onDurationTimer. Further, the UE may apply SSSG switching in DRX on-duration or skip PDCCH monitoring in DRX on-duration period. In this case, the UE may be configured to change the DRX operation in the radio frame or DRX cycle in which the wake-up signal is detected based on the above-described setting information before the reception of the PDCCH and PDSCH.

According to another embodiment, the setting information may be configured for the UE to change the DRX operation according to at least one of the reception completion time of the downlink data channel, the end time of the PDCCH monitoring window, or the expiration time of the WUR inactivity timer. In other words, when reception of the downlink data channel is completed, the UE may stop the drx-onDurationTimer. Alternatively, when the PDCCH monitoring window for monitoring the downlink control channel is terminated, the UE may stop the drx-onDurationTimer. Alternatively, when the WUR inactivity timer expires, the UE may stop the drx-onDurationTimer. Further, in each case, the UE may apply pre-configured SSSG switching in DRX on-duration or skip pre-configured PDCCH monitoring.

In this case, according to an embodiment, if the reception completion time of the downlink data channel, the end time of the PDCCH monitoring window, or the expiration time of the WUR inactivity timer occurs before DRX on-duration within the predetermined period, the setting information may be configured to prevent the UE from starting the drx-onDurationTimer for the DRX on-duration. Further, the setting information may be configured to allow the UE to apply SSSG switching or skip PDCCH monitoring in the corresponding DRX on-duration.

According to another embodiment, if the reception completion time of the downlink data channel, the end time of the PDCCH monitoring window, or the expiration time of the WUR inactivity timer occurs during DRX on-duration within the predetermined period, the setting information may be configured for the UE to stop the drx-onDurationTimer for the DRX on-duration. Further, the setting information may be configured for the UE to apply SSSG switching or skip PDCCH monitoring in the corresponding DRX on-duration.

According to another embodiment, if the reception completion time of the downlink data channel, the end time of the PDCCH monitoring window, or the expiration time of the WUR inactivity timer is after the predetermined period, the setting information may be configured for the UE either not to start or to stop the drx-onDurationTimer for DRX on-duration within the period that includes the reception completion time of the downlink data channel, the end time of the PDCCH monitoring window, or the expiration time of the WUR inactivity timer. In other words, as described above, when the predetermined period is one radio frame, if a wake-up signal is detected in the first radio frame, and when the reception completion time of the downlink data channel, the end time of the PDCCH monitoring window, or the expiration time of the WUR inactivity timer is within the second radio frame, the drx-onDurationTimer for DRX on-duration configured in the second radio frame may not be started or may be stopped. In this case, if the reception completion time of the downlink data channel, the end time of the PDCCH monitoring window, or the expiration time of the WUR inactivity timer is before the DRX on-duration, the UE may not start the drx-onDurationTimer, but if the reception completion time of the downlink data channel, the end time of the PDCCH monitoring window, or the expiration time of the WUR inactivity timer is during the DRX on-duration, the UE may stop the drx-onDurationTimer. Further, the setting information may be configured for the UE to apply SSSG switching or skip PDCCH monitoring in the corresponding DRX on-duration.

The base station may instruct the UE to (re)start wake-up signal monitoring of the low-power receiver when the WUR inactivity timer expires or the drx-onDurationTimer is stopped or the PDCCH monitoring is skipped.

According to the embodiments described above, wireless communication may be performed using a low-power receiver capable of performing a wake-up operation that efficiently consumes power. Additionally, UE's power consumption may be further reduced by limiting situations in which the main radio (MR) unnecessarily wakes up according to a preset DRX on-duration and the detection of a low-power wake-up signal in a UE simultaneously supporting a low-power wake-up operation and DRX.

Hereinafter, each embodiment related to the method for performing wireless communication using the low-power receiver will be described in detail with reference to related drawings.

If DRX is set in the UE that monitors and detects the LP-WUS through the LP-WUR(LR), the MR PDCCH monitoring is performed if the LR succeeds in the LP-WUS reception/detection within the DRX cycle. In this case, the disclosure proposes a method for setting the MR PDCCH monitoring according to DRX-on-duration to prevent it from being repeatedly performed.

In the typical DRX, the drx-onDurationTimer is started based on information such as the UE's subframe number and start offset. The UE may be instructed by the base station to perform PDCCH monitoring at the subframe number or slot allocated during the drx-onDurationTimer. For example, the UE may be configured to perform PDCCH monitoring in the 8th to 10th subframes/slots within one radio frame from the base station.

In the case of LP-WUS monitoring occlusion, the LR performs LP-WUS monitoring in the always 'ON' state when the LR continuous mode applies. However, when applying the LR duty-cycle mode, the LR may be configured with the LP-WUS monitoring occasion from the base station, and the LR monitors the LP-WUS according to the cycle specified for the LP-WUS monitoring occasion. The LP-WUS monitoring occasion may be set within the DRX cycle, or may be set every one or more subframes/slots within the radio frame. In other words, it may be set as the first, or the first and second subframes/slots in one radio frame. Further, the LP-WUS monitoring occasion may be set to operate only outside the DRX-on-duration cycle, and may be set to monitor the LP-WUS even within the DRX-on-duration period. If the LR succeeds in receiving/detecting the LP-WUS, the LR may wake up the MR and instruct it to perform PDCCH monitoring.

For example, assuming a 15kHz numerology (subcarrier spacing) constituted of 10 subframes/slots in one radio frame, the base station may set the LP-WUS monitoring occasion in the first subframe/slot and the DRX on-duration from the 8th to 10th subframes/slots for the UE. Therefore, MR wake-up by the LP-WUS detection of the LR and the MR wake-up by DRX on-duration cycle may occur twice or more within one radio frame or DRX cycle. In other words, in the case of a UE that simultaneously supports the LP-WUS/WUR function and the DRX function, it is necessary to distinguish it from the MR wake-up due to other reasons. Further, it is necessary to instruct the operation of the UE considering both the case where the MR is awakened by the LP-WUS detection and the case where the MR is awakened by the DRX on-duration. The following three cases show the relationship between the MR PDCCH monitoring by the LP-WUS detection of the LR and the PDCCH/PDSCH data end time and the DRX on-duration cycle.
- MR PDCCH/PDSCH reception end time by LP-WUS reception
   ■Case 1: Before drx-onDurationTimer (re)starts
   ■Case 2: While drx-onDurationTimer is in progress
   ■Case 3: After drx-onDurationTimer expires

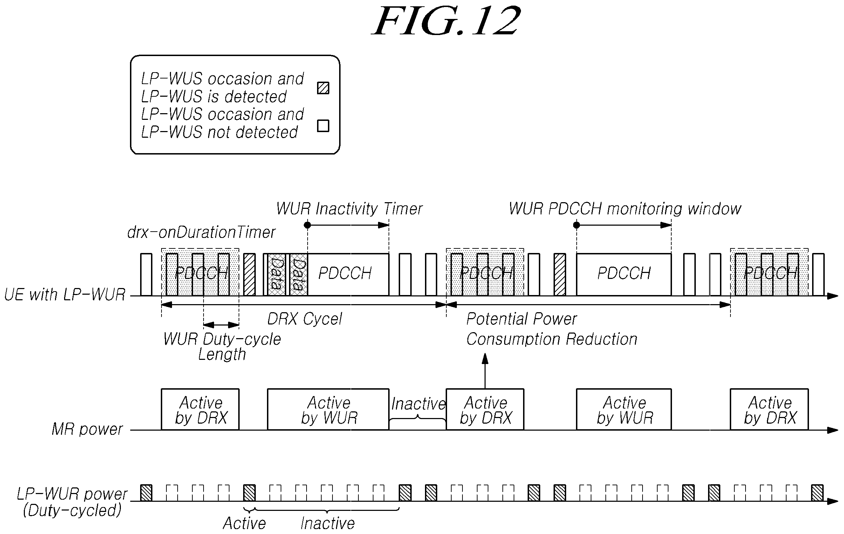

FIGS. 12 to 14 show the power consumption savings of the UE for each of Cases 1 to 3 described above, when embodiments of the disclosure are apply. In this case, although illustrated for the LR in duty-cycle mode, the embodiments of the disclosure may also be applied to the continuous mode.

FIG. 12 illustrates a case where PDCCH/PDSCH data reception is completed by LP-WUS detection before the DRX on-duration period arrives. For example, the LR wakes up the MR when detecting the LP-WUS in the first subframe/slot and instructs the MR to perform PDCCH monitoring (LR-triggered PDCCH monitoring), and the MR completes the reception of PDCCH/PDSCH data reception. In this case, the data reception completion time or the low-power receiver inactivity timer (WUR inactivity timer) expiration time may be before the start of drx-onDurationTimer. In other words, after completing the reception of PDSCH data, the MR enters the sleep (inactive) mode for a while but, according to the DRX on-duration cycle set from the 8th to 10th subframes/slots, the MR wakes up again and enters the active mode to perform PDCCH monitoring. Therefore, in this disclosure, if the LR receives the LP-WUS, the base station may instruct the UE to temporarily stop the DRX on-duration timer set within the frame, to set SSSG switching within the DRX on-duration, or to skip PDCCH monitoring.

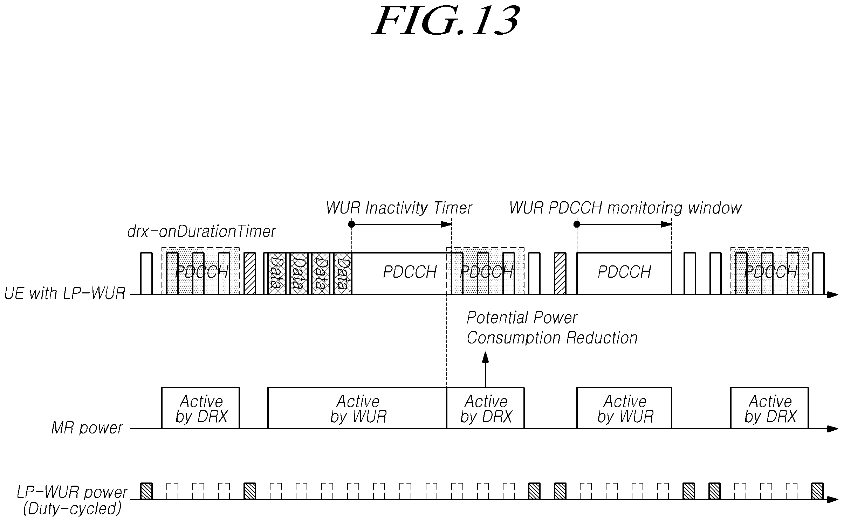

FIG. 13 illustrates a case where PDCCH/PDSCH data reception is completed by LP-WUS detection while the DRX on-duration is in progress. For example, this occurs when MR wake-up and the PDCCH/PDSCH data reception completion time or the WUR inactivity timer expiration time due to LP-WUS detection happen while the drx-onDurationTimer is in progress. In other words, even when the reception of PDCCH/PDSCH data is completed or the WUR inactivity timer expires, the MR may not enter the sleep state due to the DRX on-duration but instead continues to maintain MR wake-up and an active state to perform PDCCH monitoring until the drx-onDurationTimer expires. Therefore, in this disclosure, as in Case 1, if the LR receives the LP-WUS, the base station may instruct the UE to temporarily stop the DRX on-duration timer set within the frame, enable SSSG switching within the DRX on-duration after the WUR inactivity timer expires, or skip PDCCH monitoring.

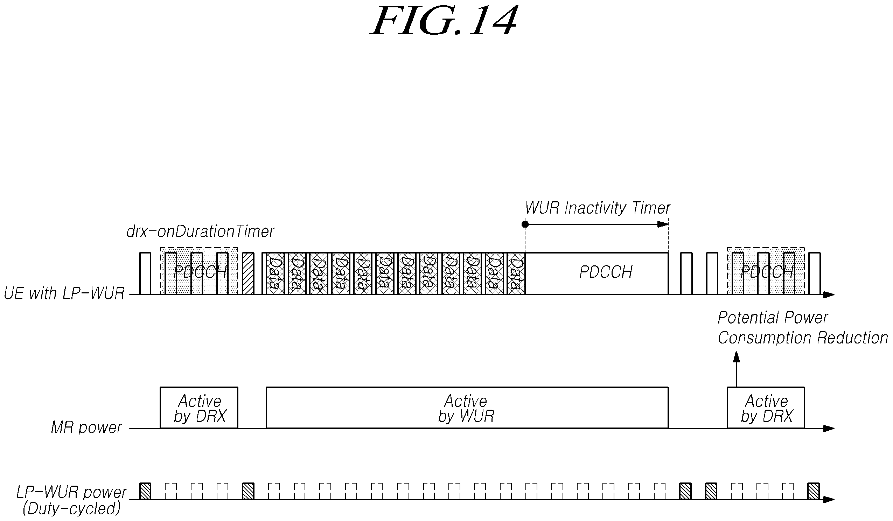

FIG. 14 illustrates a case where PDCCH/PDSCH data reception is completed in the next frame or DRX cycle beyond the DRX on-duration period set in the frame in which LP-WUS is received. In other words, the UE receives data over several radio frames. For example, tis occurs when PDCCH/PDSCH data reception continues and is completed through one or more frames after the radio frame where the LP-WUS was detected. In this disclosure, the base station may instruct the UE to stop the DRX on-duration timer when the LR detects LP-WUS and to skip the DRX on-duration within the frame with respect to the subframe/slot in which the WUR inactivity timer expires. The UE may (re)start the on-duration timer starting from the next frame or DRX cycle.

In summary, the disclosure proposes a method to skip PDCCH monitoring in the DRX on-duration set within the frame for the subframe/slot in which the UE detects LP-WUS. In other words, when the LR detects the LP-WUS, the base station may provide necessary information to configure the UE not to start the drx-onDurationTimer set in the corresponding radio frame or instruct the UE to skip PDCCH monitoring in the DRX on-duration period. Further, it may be configured either not to start or to stop the drx-onDurationTimer while the PDCCH/PDSCH data reception proceeds over several frames. For the above-described operations, the base station may include information instructing the UE not to start the drx-onDurationTimer in the LP-WUS payload sent to the LR of the UE and transmit this information. Alternatively, the base station may configure, include, and transmit a new SSSG configuration for instructing the UE to skip PDCCH monitoring within the DRX on-duration period in the corresponding frame when the UE receives the LP-WUS through the LP-WUS payload or in advance.

This disclosure also proposes a method of the UE for skipping PDCCH monitoring in the DRX on-duration set in the corresponding frame based on the MR PDCCH/PDSCH data reception completion time due to LP-WUS detection. The MR PDCCH/PDSCH data reception triggered by the LP-WUS detection may last until the next DRX cycle or radio frame. Thereafter, the MR enters sleep mode after the completion of data reception, but wake up again in the DRX on-duration set in the corresponding frame to perform PDCCH monitoring, causing unnecessary power consumption. Here, the data reception completion time may be the subframe/slot in which the last DL data is received or the subframe/slot in which the WUR inactivity timer expires. To support the above-described operations, the base station may instruct the UE to skip PDCCH monitoring during the DRX on-duration in the frame that includes the subframe/slot in which the WUR inactivity timer expires or in which the data reception triggered by LP-WUS detection of the LR is completed.

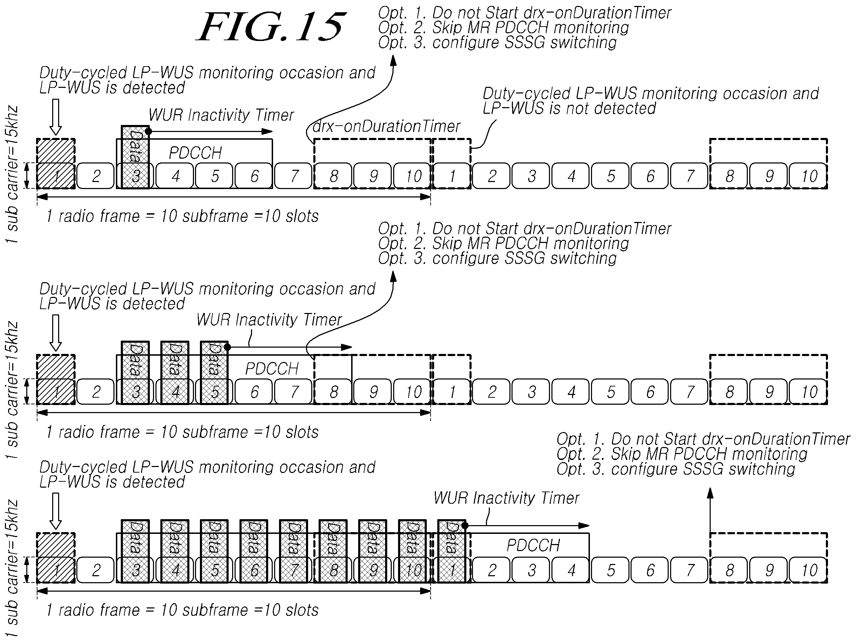

FIG. 15 illustrates a method for saving the UE's power consumption by changing DRX-related information when the LR receives an LP-WUS when a UE equipped with a low-power receiver. This method, proposed in the disclosure, supports LP-WUS/WUR and DRX, and FIG. 15 also illustrates Case 1 to Case 3 for the MR PDCCH/PDSCH reception end time by LP-WUS reception described above.

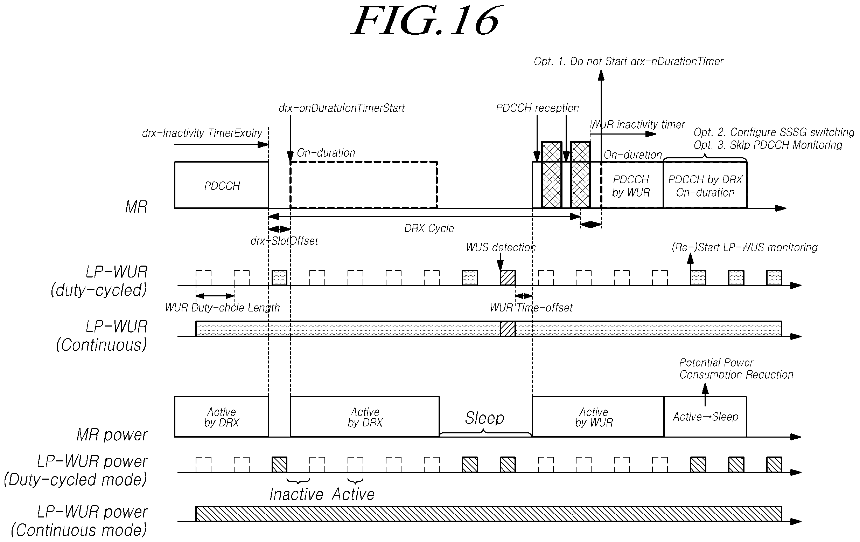

FIG. 16 illustrates an example demonstrating a power consumption saving effect for a duty-cycle mode or continuous mode UE in Case 2 when the disclosure applies. This figure presents a method for saving power consumption of the UE by reducing instances of MR wake-up caused by DRX when receiving an LP-WUS. Here, the base station may instruct the duty-cycle mode UE to, when the WUR inactivity timer expires, allow the MR to enter the sleep state while simultaneously (re)starting LP-WUS monitoring in the DRX on-duration period.

The power saving operation of a DRX-enabled UE equipped with a low-power receiver as proposed in the disclosure is summarized and described. The LR-equipped UE to which embodiments of the disclosure are applied may receive, from the base station, LP-WUS-related timer and setting information (WUS (e.g., WUR inactivity timer, WUR PDCCH monitoring window, SSSG switching, PDCCH skipping point, LP-WUS monitoring restart point, etc.) through, e.g., system information block (SIB) or RRC (Re-)Configuration. SSSG switching and PDCCH monitoring skipping may be applied to the DRX on-duration timer set in the frame when LP-WUS is received, and may also be applied to the subframe/slot of the DRX on-duration set in the frame when the WUR inactivity timer expires. Further, instructions for drx-onDurationTimer, performing SSSG switching, and skipping PDCCH monitoring may be transferred in bit form through the LP-WUS payload. When the on-duration timer is stopped or PDCCH monitoring in the on-duration period is skipped by the base station's instruction, the LR may (re)start LP-WUS monitoring. Further, the base station may configure the UE to (re)start the stopped DRX on-duration timer from the next frame when the UE completes PDCCH/PDSCH data reception or when the WUR inactivity timer expires.

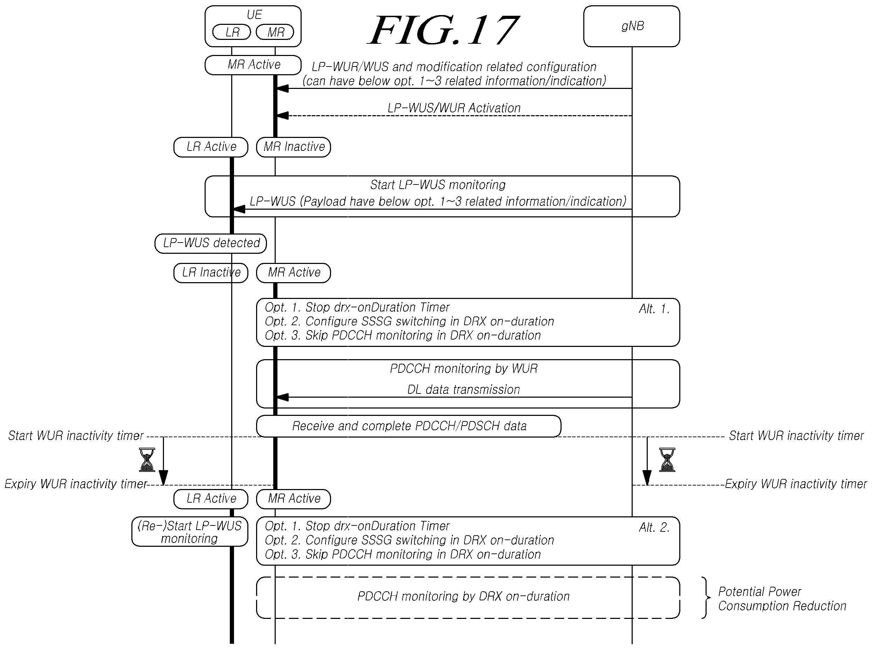

FIG. 17 is a disagram illustrating a PDCCH monitoring skip operation based on a low-power receiver according to an embodiment. FIG. 17 also illustrates the UE and base station operations in procedure embodiments between a UE and a base station for power savings of an LP-WUS/WUR and DRX-enabled UE as proposed in the disclosure.

### [UE operations]

- 1. The MR receives LP-WUR/WUS and DRX-related setting information including, at least, the following information from the base station.
   ■Setting information for changing LP-WUR/WUS and DRX operation may include the following:
      • The LP-base station synchronization signal (low-power synchronization signal, LP-SS) information for LP-WUS reception may be included considering the LP-WUS monitoring operation of the duty-cycle mode LR
      • LP-WUS monitoring occasion: LR in duty-cycle mode includes periodic information for monitoring LP-WUS.
         ●e.g.) LP-WUS monitoring is set in the first subframe or slot per radio frame
         ●e.g.) DRX on-duration period is set from the 8th to 10th slots per radio frame, as supported in the typical DRX
      • WUR inactivity timer: This is information about the timer that operates after receiving PDCCH or PDSCH data through the MR after the LR detects the LP-WUS. The timer is reset or initialized to (re)start whenever the UE receives data. While the timer is in operation, the MR maintains the active state to continuously monitor PDCCH, and the LR maintains the inactive (sleep) state. When the timer expires, the MR enters the inactive state and the LR enters the active state to perform LP-WUS monitoring.
      • WUR triggered MR PDCCH monitoring window: This may be defined as the number of subframes/slots or the period during which the MR monitors the PDCCH when the LR detects the LP-WUS.
      • Information to stop the drx-onDurationTimer when detecting the LP-WUS. This may be maintained until the frame where PDCCH/PDSCH data reception is completed or until there is an instruction to (re)start the drx-onDurationTimer.
      • Information to skip PDCCH monitoring in the DRX on-duration period when detecting the LP-WUS. This may be maintained until the frame where PDCCH/PDSCH reception is completed or until the frame where WUR inactivity timer expires.
      • Information to apply SSSG switching in the DRX on-duration period when detecting the LP-WUS. This may be maintained until the frame where PDCCH/PDSCH reception is completed or until the frame where WUR inactivity timer expires.
      • Instruction information to stop the drx-onDurationTimer set in the corresponding frame when the WUR inactivity timer expires.
      • Information instructing to (re)start the drx-onDurationTimer from the next frame when the WUR inactivity timer expires.
      • Information instructing to (re)activate or (re)start LP-WUS monitoring of the LR when the WUR inactivity timer expires
- 2. The UE monitors the LP-WUS through the LR and may succeed in LP-WUS reception/detection.
   ■To change the DRX operation according to LP-WUS detection, the LP-WUS payload may include the following information, and the information below may be included as a combination of one or more thereof.
      • Information to stop the drx-onDurationTimer
         ●Stop the timer when the LR detects the LP-WUS or when the WUR inactivity timer expires
      • Information to (re)start the drx-onDurationTimer
         ●The timer (re)starts from the next after the PDCCH/PDSCH data reception of the MR is terminated or after the next frame after the WUR inactivity timer expires.
      • Information to apply SSSG switching in the DRX on-duration period
      • Information to skip PDCCH monitoring in the DRX on-duration period
      • Information and time to (re) activate LP-WUS monitoring of the LR
         ●When the PDCCH/PDSCH data reception of the MR is terminated, or when the WUR inactivity timer expires
- 3. The UE may perform MR wake-up and PDCCH monitoring.
   ■The UE detecting the LP-WUS may apply the following operations in the DRX on-duration period from the previous setting information of Step 1 or Step 2. LP-WUS payload described above, and transmit whether to change/apply to the base station and the network.
      • may stop the drx-onDurationTimer when detecting the LP-WUS. (enter MR inactive/sleep)
         ●(re)start the LP-WUS monitoring operation through the LR
      • skip PDCCH monitoring or SSSG switching application in the DRX on-duration period when detecting the LP-WUS
- 4. The UE may detect DCI and receive PDSCH data through the PDCCH through the MR.
   ■The WUR inactivity timer is restarted upon reception of PDSCH data.
- 5. When the WUR inactivity timer expires, the UE may perform the following operations.
   ■stop the DRX on-duration timer set in the corresponding frame where the WUR inactivity timer expires.
      (enter MR inactive/sleep state)
      • may (re)start the LP-WUS monitoring operation through the LR
      • may transmit, to the base station, (re)starting or having (re)started the drx-onDurationTimer from the next frame of the one where the WUR inactivity timer expires.
   ■omit SSSG switching or PDCCH monitoring in the DRX on-duration in the corresponding frame where the WUR inactivity timer expires
      • may perform the conventional MR PDCCH monitoring operation and transmit the corresponding information to the base station from the next frame of the one where the WUR inactivity timer expires.

### [Base station operations]

- 1. The base station may transmit, to the UE, LP-WUS/WUS and DRX-related setting information including, at least, the following information.
   ■ Setting information for changing LP-WUR/WUS and DRX operation may include the following:
      • The LP-base station synchronization signal (low-power synchronization signal, LP-SS) information for LP-WUS reception may be included considering the LP-WUS monitoring operation of the duty-cycle mode LR
      • LP-WUS monitoring occasion: LR in duty-cycle mode includes periodic information for monitoring LP-WUS.
         ●e.g.) LP-WUS monitoring is set in the first subframe or slot per radio frame
         ●e.g.) DRX on-duration period is set in the 8th to 10th slots per radio frame as it is supported in the conventional DRX
      • WUR inactivity timer: This is information about the timer that operates after receiving PDCCH or PDSCH data through the MR after the LR detects the LP-WUS. The timer is reset or initialized to (re)start whenever the UE receives data. While the timer is in operation, the MR maintains the active state to continuously monitor PDCCH, and the LR maintains the inactive (sleep) state. When the timer expires, the MR enters the inactive state and the LR enters the active state to perform LP-WUS monitoring.
      • WUR triggered MR PDCCH monitoring window: This may be defined as the number of subframes/slots or the period when the MR monitors the PDCCH when the LR detects the LP-WUS.
      • Information to stop the drx-onDurationTimer when detecting the LP-WUS. This may be maintained until the frame where PDCCH/PDSCH data reception is completed or until there is an instruction to (re)start the drx-onDurationTimer.
      • Information to skip PDCCH monitoring in the DRX on-duration period when detecting the LP-WUS. This may be maintained until the frame where PDCCH/PDSCH reception is completed or until the frame where WUR inactivity timer expires.
      • Information to apply SSSG switching in the DRX on-duration period when detecting the LP-WUS. This may be maintained until the frame where PDCCH/PDSCH reception is completed or until the frame where WUR inactivity timer expires.
      • Instruction information to stop the drx-onDurationTimer set in the corresponding frame when the WUR inactivity timer expires.
      • Information instructing to (re)start the drx-onDurationTimer from the next frame when the WUR inactivity timer expires.
      • Information instructing to (re)activate or (re)start LP-WUS monitoring of the LR when the WUR inactivity timer expires
- 2. instructs the UE to switch to the LR mode.
- 3. transmits the LP-WUS to the LR of the UE. The LP-WUS may include the following information.
   ■The base station may include the following information in the LP-WUS payload and transmit it to the UE. The following information may be included as a combination of one or more thereof.
      • Information to stop the drx-onDurationTimer
         ●Stop the timer when the LR detects the LP-WUS or when the WUR inactivity timer expires
      • Information to (re)start the drx-onDurationTimer
         ●The timer (re)starts from the next after the PDCCH/PDSCH data reception of the MR is terminated or after the next frame after the WUR inactivity timer expires.
      • Information to apply SSSG switching in the DRX on-duration period
      • Information to skip PDCCH monitoring in the DRX on-duration period
      • Information and time to (re) activate LP-WUS monitoring of the LR
         ●When the PDCCH/PDSCH data reception of the MR is terminated, or when the WUR inactivity timer expires
- 4. may instruct the UE to (re)start LP-WUS monitoring of the LR.
   ■When the WUR inactivity timer expires, or the drx-onDurationTimer is stopped, or PDCCH monitoring is skipped, the base station may instruct to (re)start LP-WUS monitoring of the LR.

UEs supporting LP-WUS/WUR and DRX simultaneously may experience frequent MR wake-ups due to LP-WUS detection and the DRX on-duration. Therefore, the disclosure proposes a method for further reducing the power consumption of a UE by skipping PDCCH monitoring in the DRX on-duration to limit unnecessary wake-up operations of the MR due to DRX.

Configurations of a UE and a base station capable of performing all or some of the embodiments described above in connection with FIGS. 1 to 17 are described below with reference to the drawings.. To prevent redundancy, some descriptions may be omitted, and the omitted content may still be applied in essentially the same manner to the following description, provided that it does not go against the technical spirit of the disclosure.

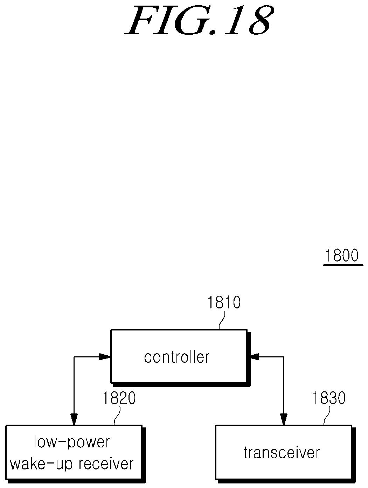

FIG. 18 is a block diagram illustrating a UE 1800 according to an embodiment.

Referring to FIG. 18, a UE 1800 according to an embodiment includes a low-power receiver 1820, a transceiver 1830, and a controller 1810 that controls the operations of the low-power receiver and the transceiver.

The controller 1810 controls the overall operation of the UE 1800 according to a method for performing wireless communication using a low-power receiver as required to implement the disclosure described above.

The controller 1810 may receive configuration information on a low-power wake-up operation.

The controller 1810 may receive setting information including configuration information on a low-power wake-up operation and configuration information on a discrete reception (DRX) operation. According to an embodiment, the controller 1810 may receive the setting information including the configuration information on the low-power wake-up operation and the configuration information on the DRX operation through higher layer signaling such as RRC signaling.

The configuration information on the low-power wake-up operation may include configuration information used to perform the low-power wake-up operation. The configuration information on the low-power wake-up operation may include the monitoring cycle or monitoring occlusion information on the wake-up signal in the LR mode, PDCCH monitoring information in the MR mode, setting information for switching between modes, or other related information. Further, the configuration information on the low-power wake-up operation may include information for configuring the wake-up signal (LP-WUS). Further, the configuration information on the low-power wake-up operation may include configuration information for other operations of the low-power receiver (LP-WUR, LR).

The configuration information on the DRX operation may include configuration information used to perform the DRX operation. In particular, the configuration information for the DRX operation in an embodiment of the disclosure may include configuration information for changing (e.g., modifying) the legacy DRX operation according to the low-power wake-up operation. The configuration information for the DRX operation may include information for not starting or for stopping the DRX on-duration timer (drx-onDurationTimer), information for skipping PDCCH monitoring, information for applying SSSG switching, or other related information, for the DRX operation set for the UE. The specific information was described above in connection with FIG. 10, and to avoid redundancy, it is not repeated below.

According to an embodiment, the setting information may be received through at least one of higher layer signaling and a wake-up signal. In other words, at least part of the setting information may be included in the payload of the wake-up signal and received. This is further described below.

The controller 1810 may monitor the wake-up signal (low-power wake-up signal, LP-WUS) through the low-power receiver based on the setting information. The controller 1810 may switch to LR mode based on the configuration information about the low-power wake-up operation included in the setting information. According to an embodiment, when receiving an instruction to switch to LR mode from the base station, the controller 1810 may monitor whether a wake-up signal is transmitted from the base station through the low-power receiver corresponding to LR. Alternatively, according to another example, when a timer associated with switching to LR mode is configured, the controller 1810 may switch to LR mode according to the timer's configuration.

If switching to LR mode, the controller 1810 may monitor the wake-up signal through the low-power receiver without performing wireless communication via the MR. Based on the configuration information about the low-power wake-up operation, the controller 1810 may monitor the wake-up signal within the radio resource allocated as the wake-up signal monitoring occasion until the wake-up signal is received.

As described above, at least part of the setting information may be included in the payload of the wake-up signal to change the DRX operation based on the detection of the wake-up signal. The specific information included in the payload of the wake-up signal was described above in connection with FIG. 10, and to avoid redundancy, it is not repeated below.

When the wake-up signal is received, the controller 1810 may monitor the downlink control channel PDCCH through the transceiver and receive the downlink data channel PDSCH according to the reception of the downlink control channel. When the wake-up signal is received, the controller 1810 may deactivate the low-power receiver and activate the transceiver to switch to the MR mode for performing wireless communication. As in a typical case, the controller 1810 may monitor the downlink control channel containing the scheduling information and identify the downlink control information included within the received downlink control channel. The controller 1810 may receive the downlink data channel based on the scheduling information included in the downlink control information.

The controller 1810 may change the DRX operation for a predetermined period based on the setting information. As described above, the controller 1810, upon detecting the wake-up signal, may change the DRX operation based on setting information received through higher layer signaling or setting information included in the payload of the wake-up signal. In other words, the controller 1810 may change the operation within the DRX on-duration, and may transmit the corresponding change to at least one of the base station and the network.

According to an embodiment, the predetermined period may be set as one or more radio frames. Alternatively, the predetermined period may be set as one cycle according to the DRX cycle. This is merely an example and is not limited to a specific period, as long as the wake-up signal monitoring occasion and DRX on-duration are included in the predetermined period.

According to an embodiment, the controller 1810 may be configured to change the DRX operation when a wake-up signal is detected based on the setting information. In other words, when the wake-up signal is detected, the controller 1810 may stop the drx-onDurationTimer. Further, the controller 1810 may apply SSSG switching during DRX on-duration or skip PDCCH monitoring during DRX on-duration period. In this case, the controller 1810 may be configured to change the DRX operation within the radio frame or DRX cycle in which the wake-up signal is detected based on the above-described setting information before the reception of the PDCCH and PDSCH in step S1030.

According to another embodiment, the controller 1810 may be configured to change the DRX operation according to at least one of the following parameters: the reception completion time of the downlink data channel, the end time of the PDCCH monitoring window, or the expiration time of the WUR inactivity timer based on the setting information. In other words, when the reception of the downlink data channel is completed, the controller 1810 may stop the drx-onDurationTimer. Alternatively, when the PDCCH monitoring window for monitoring the downlink control channel ends, the controller 1810 may stop the drx-onDurationTimer. Alternatively, when the WUR inactivity timer expires, the controller 1810 may stop the drx-onDurationTimer. Further, the controller 1810 may apply pre-configured SSSG switching during DRX on-duration or skip pre-configured PDCCH monitoring.

In this case, according to an embodiment, when the reception completion time of the downlink data channel, the end time of the PDCCH monitoring window, or the expiration time of the WUR inactivity timer occurs before DRX on-duration within the predetermined period, the controller 1810 may be configured not to start the drx-onDurationTimer for the DRX on-duration. Further, the controller 1810 may apply SSSG switching or skip PDCCH monitoring in the corresponding DRX on-duration.

According to another embodiment, if the reception completion time of the downlink data channel, the end time of the PDCCH monitoring window, or the expiration time of the WUR inactivity timer occurs during DRX on-duration within the predetermined period, the controller 1810 may stop the drx-onDurationTimer for the DRX on-duration. Further, the controller 1810 may apply SSSG switching or skip PDCCH monitoring in the corresponding DRX on-duration.

According to further another embodiment, if the reception completion time of the downlink data channel, the end time of the PDCCH monitoring window, or the expiration time of the WUR inactivity timer occurs after the predetermined period, the controller 1810 may either not start or stop the drx-onDurationTimer for DRX on-duration within the period that includes the reception completion time of the downlink data channel, the end time of the PDCCH monitoring window, or the expiration time of the WUR inactivity timer. In other words, as described above, when the predetermined period is one radio frame, if a wake-up signal is detected in the first radio frame, and when the reception completion time of the downlink data channel, the end time of the PDCCH monitoring window, or the expiration time of the WUR inactivity timer falls within the second radio frame, the drx-onDurationTimer for DRX on-duration configured in the second radio frame may not be started or may be stopped. In this case, if the reception completion time of the downlink data channel, the end time of the PDCCH monitoring window, or the expiration time of the WUR inactivity timer is before the DRX on-duration, the controller 1810 may not start the drx-onDurationTimer, but if the reception completion time of the downlink data channel, the end time of the PDCCH monitoring window, or the expiration time of the WUR inactivity timer is during the DRX on-duration, the UE may stop the drx-onDurationTimer.

According to the embodiments, wireless communication may be performed using a low-power receiver capable of performing a wake-up operation that efficiently consumes power. The UE's power consumption may be further reduced by limiting situations in which the main radio (MR) unnecessarily wakes up due to a preset DRX on-duration and the detection of a low-power wake-up signal in a UE that simultaneously supports a low-power wake-up operation and DRX.

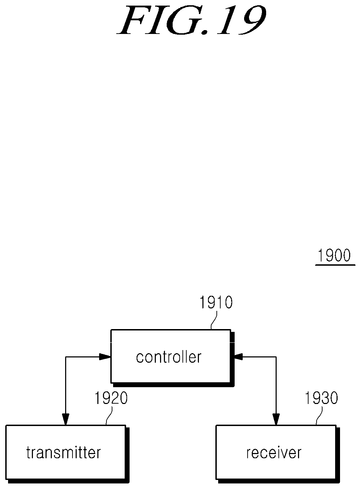

FIG. 19 is a block diagram illustrating a base station 1900 according to an embodiment.

Referring to FIG. 19, a base station 1900 according to an embodiment includes a transmitter 1920, a receiver 1930, and a controller 1910 controlling operations of the transmitter and the receiver.

The controller 1910 controls the overall operation of the base station 1900 according to a method for performing wireless communication using a low-power receiver as required to implement the disclosure described above. The transmitter 1920 transmits downlink control information and data or messages to the UE via a corresponding channel. The receiver 1930 receives uplink control information and data or messages from the UE via a corresponding channel.

The controller 1910 may transmit setting information including configuration information about a low-power wake-up operation and configuration information about a discrete reception (DRX) operation. According to an embodiment, the controller 1910 may transmit the setting information including the configuration information about the low-power wake-up operation and the configuration information about the DRX operation through higher layer signaling such as RRC signaling.

The configuration information about the low-power wake-up operation may include configuration information necessary to perform the low-power wake-up operation. The configuration information about the low-power wake-up operation may include the monitoring cycle or monitoring occlusion information for the wake-up signal in LR mode, PDCCH monitoring information in MR mode, setting information for switching between modes, and the like. Further, the configuration information about the low-power wake-up operation may include information for configuring the wake-up signal (LP-WUS). Additionally, it may include the configuration information about the low-power wake-up operation may include configuration information for other operations of the low-power receiver (LP-WUR, LR).

The configuration information about the DRX operation may include configuration information necessary to perform the DRX operation. In particular, the configuration information about the DRX operation in this embodiment may include configuration information for modifying the legacy DRX operation based on the low-power wake-up operation. The configuration information about the DRX operation may include information to prevent the start of or to stop the DRX on-duration timer (drx-onDurationTimer), information to skip PDCCH monitoring, information to apply SSSG switching, and similar settings for the DRX operation set for the UE. The specific information was described above in connection with FIG. 10, and to avoid redundancy, it is not repeated below.

According to an embodiment, the setting information may be received through at least one of higher layer signaling and a wake-up signal. In other words, at least part of the setting information may be included in the payload of the wake-up signal and received. This is detail described below.

If downlink data to be transmitted to the UE is identified, the controller 1910 may transmit a wake-up signal (WUS) to the UE based on the configuration information. The UE may switch to the LR mode based on the configuration information about the low-power wake-up operation included in the setting information. According to an embodiment, when receiving an instruction to switch to the LR mode from the base station, the UE may monitor whether the wake-up signal is transmitted from the base station through the low-power receiver corresponding to the LR. Alternatively, according to another embodiment, when a timer associated with switching to the LR mode is configured, the UE may switch to the LR mode according to the timer's configuration.

If switching to the LR mode, the UE may monitor the wake-up signal through the low-power receiver without performing wireless communication according to the MR. Based on the configuration information about the low-power wake-up operation, the UE may monitor the wake-up signal in the radio resource allocated as a wake-up signal monitoring occasion until the wake-up signal is received.

As described above, at least part of the setting information may be included in the payload of the wake-up signal to change the DRX operation based on the detection of the wake-up signal. The specific information included in the payload of the wake-up signal was described above in connection with FIG. 10, and to avoid redundancy, it is not repeated below.

The controller 1910 may transmit a downlink control channel (PDCCH) and a downlink data channel (PDSCH). When the wake-up signal is received by the UE, the controller 1910 may transmit a downlink control channel containing scheduling information to the UE as in a normal case. The controller 1910 may transmit the downlink data channel based on the scheduling information included within the downlink control channel.

The controller 1910 may instruct the UE to restart wake-up signal monitoring based on the setting information. As described above, the UE detecting the wake-up signal may change the DRX operation based on setting information received through higher layer signaling or setting information included in the payload of the wake-up signal. In other words, the UE may change the operation within the DRX on-duration and may transmit the corresponding change to at least one of the base station or the network.

According to an example, the predetermined period may be set as one or more radio frames. Alternatively, the predetermined period may be set as one cycle according to the DRX cycle. This is merely an example and is not limited to a specific period, as long as the wake-up signal monitoring occasion and DRX on-duration are included in the predetermined period.

According to an embodiment, the setting information may be configured for the UE to change the DRX operation when a wake-up signal is detected. In other words, when the wake-up signal is detected, the UE may stop the drx-onDurationTimer. Further, the UE may apply SSSG switching during DRX on-duration or skip PDCCH monitoring during DRX on-duration period. In this case, the UE may be configured to change the DRX operation within the radio frame or DRX cycle in which the wake-up signal is detected based on the above-described setting information before the reception of the PDCCH and PDSCH.

According to another embodiment, the setting information may be configured for the UE to change the DRX operation based on at least one of the following: the reception completion time of the downlink data channel, the end time of the PDCCH monitoring window, or the expiration time of the WUR inactivity timer. In other words, when the reception of the downlink data channel is completed, the UE may stop the drx-onDurationTimer. Alternatively, when the PDCCH monitoring window for monitoring the downlink control channel ends, the UE may stop the drx-onDurationTimer. Alternatively, when the WUR inactivity timer expires, the UE may stop the drx-onDurationTimer. Further, in each case, the UE may apply pre-configured SSSG switching during DRX on-duration or skip pre-configured PDCCH monitoring.

In this case, according to an embodiment, when the reception completion time of the downlink data channel, the end time of the PDCCH monitoring window, or the expiration time of the WUR inactivity timer is before DRX on-duration within the predetermined period, the setting information may be configured for the UE to not start the drx-onDurationTimer for the DRX on-duration. Further, the setting information may be configured for the UE to apply SSSG switching or skip PDCCH monitoring in the corresponding DRX on-duration.

According to another embodiment, if the reception completion time of the downlink data channel, the end time of the PDCCH monitoring window, or the expiration time of the WUR inactivity timer occurs during DRX on-duration within the predetermined period, the setting information may be configured for the UE to stop the drx-onDurationTimer for the DRX on-duration. Further, the setting information may be configured for the UE to apply SSSG switching or skip PDCCH monitoring in the corresponding DRX on-duration.

According to another embodiment, if the reception completion time of the downlink data channel, the end time of the PDCCH monitoring window, or the expiration time of the WUR inactivity timer occurs after the predetermined period, the setting information may be configured for the UE either not to start or to stop the drx-onDurationTimer for DRX on-duration within the period that includes the reception completion time of the downlink data channel, the end time of the PDCCH monitoring window, or the expiration time of the WUR inactivity timer. In other words, as described above, when the predetermined period is one radio frame, if a wake-up signal is detected in the first radio frame, and when the reception completion time of the downlink data channel, the end time of the PDCCH monitoring window, or the expiration time of the WUR inactivity timer is within the second radio frame, the drx-onDurationTimer for DRX on-duration configured in the second radio frame may not be started or may be stopped. In this case, if the reception completion time of the downlink data channel, the end time of the PDCCH monitoring window, or the expiration time of the WUR inactivity timer is before the DRX on-duration, the UE may not start the drx-onDurationTimer, but if the reception completion time of the downlink data channel, the end time of the PDCCH monitoring window, or the expiration time of the WUR inactivity timer is during the DRX on-duration, the UE may stop the drx-onDurationTimer. Further, the setting information may be configured for the UE to apply SSSG switching or skip PDCCH monitoring in the corresponding DRX on-duration.

The controller 1910 may instruct the UE to (re)start wake-up signal monitoring of the low-power receiver when the WUR inactivity timer expires or the drx-onDurationTimer is stopped or the PDCCH monitoring is skipped.

According to the embodiments described above, wireless communication is performed using a low-power receiver capable of performing a wake-up operation that efficiently consumes power. Further, the UE's power consumption may be reduced by limiting situations in which the main radio (MR) unnecessarily wakes up due to a preset DRX on-duration and the detection of a low-power wake-up signal in a UE simultaneously supporting a low-power wake-up operation and DRX.

The embodiments described above may be supported by the standard documents disclosed in at least one of the radio access systems such as IEEE 802, 3GPP, and 3GPP2. That is, the steps, configurations, and parts, which have not been described in the present embodiments, may be supported by the above-mentioned standard documents for clarifying the technical concept of the disclosure. In addition, all terms disclosed herein may be described by the standard documents set forth above.

The above-described embodiments may be implemented by any of various means. For example, the present embodiments may be implemented as hardware, firmware, software, or a combination thereof.

In the case of implementation by hardware, the method according to the present embodiments may be implemented as at least one of an application specific integrated circuit (ASIC), a digital signal processor (DSP), a digital signal processing device (DSPD), a programmable logic device (PLD), a field programmable gate array (FPGA), a processor, a controller, a microcontroller, or a microprocessor.

In the case of implementation by firmware or software, the method according to the present embodiments may be implemented in the form of an apparatus, a procedure, or a function for performing the functions or operations described above. Software code may be stored in a memory unit, and may be driven by the processor. The memory unit may be provided inside or outside the processor, and may exchange data with the processor by any of various well-known means.

In addition, the terms "system", "processor", "controller", "component", "module", "interface", "model", "unit", and the like may generally mean computer-related entity hardware, a combination of hardware and software, software, or running software. For example, the above-described components may be, but are not limited to, a process driven by a processor, a processor, a controller, a control processor, an entity, an execution thread, a program and/or a computer. For example, both the application that is running in a controller or a processor and the controller or the processor may be components. One or more components may be provided in a process and/or an execution thread, and the components may be provided in a single device (e.g., a system, a computing device, etc.), or may be distributed over two or more devices.

The above embodiments of the disclosure have been described only for illustrative purposes, and those skilled in the art will appreciate that various modifications and changes may be made thereto without departing from the scope and spirit of the disclosure. Further, the embodiments of the disclosure are not intended to limit, but are intended to illustrate the technical idea of the disclosure, and therefore the scope of the technical idea of the disclosure is not limited by these embodiments. The scope of the disclosure shall be construed on the basis of the accompanying claims in such a manner that all of the technical ideas included within the scope equivalent to the claims belong to the disclosure.

## Claims

1. A method for performing wireless communication by a user equipment (UE) using a low-power receiver (low power wakeup receiver, LR), the method comprising:
receiving setting information including configuration information regarding a low-power wake-up operation and configuration information regarding a discontinuous reception (DRX) operation;
monitoring a wake-up signal (low power wake-up signal, LP-WUS) through the low-power receiver based on the setting information;
monitoring a downlink control channel (PDCCH) and receiving a downlink data channel (PDSCH), through a transceiver, upon reception of the wake-up signal; and
changing the DRX operation for a predetermined period based on the setting information.

2. The method of claim 1, wherein the setting information is received through at least one of higher layer signaling and the wake-up signal.

3. The method of claim 1, wherein the changing the DRX operation comprises:
preventing a DRX on-duration timer (drx-onDurationTimer) for the DRX on-duration from starting when an expiration time of reception of the downlink data channel or an expiration time of a low-power receiver inactivity timer (WUR inactivity timer) occurs before the DRX on-duration in the predetermined period.

4. The method of claim 1, wherein the changing the DRX operation comprises:
stopping a DRX on-duration timer for the DRX on-duration when an expiration time of reception of the downlink data channel or an expiration time of a low-power receiver inactivity timer is during the DRX on-duration in the predetermined period.

5. The method of claim 1, wherein the changing the DRX operation comprises:
preventing a DRX on-duration timer from starting or stopping the DRX on-duration timer for the DRX on-duration in a period including an expiration time of a low-power receiver inactivity timer when an expiration time of reception of the downlink data channel or an expiration time of the low-power receiver inactivity timer occurs after the predetermined section.

6. A method for controlling an operation of a user equipment (UE) performing wireless communication using a low-power receiver (low power wake-up receiver, LR) by a base station, the method comprising:
transmitting setting information including configuration information regarding a low-power wake-up operation and configuration information regarding a discontinuous reception (DRX) operation;
instructing the UE to monitor a wake-up signal (WUS) and transmitting the wake-up signal based on the setting information;
transmitting a downlink control channel (PDCCH) and a downlink data channel (PDSCH); and
instructing the UE to restart the wake-up signal monitoring based on the setting information.

7. The method of claim 6, wherein the setting information is transmitted through at least one of higher layer signaling and the wake-up signal.

8. The method of claim 6, wherein the setting information is configured to instruct the UE not to start a DRX on-duration timer (drx-onDurationTimer) for the DRX on-duration when an expiration time of reception of the downlink data channel or an expiration time of a low-power receiver inactivity timer (WUR inactivity timer) occurs before the DRX on-duration in a predetermined section.

9. The method of claim 6, wherein the setting information is configured to instruct the UE to stop a DRX on-duration timer for the DRX on-duration when an expiration time of reception of the downlink data channel or an expiration time of a low-power receiver inactivity timer occurs during the DRX on-duration in a predetermined period.

10. The method of claim 6, wherein the setting information is configured to instruct the UE not to start or to stop a DRX on-duration timer for the DRX on-duration in a section including an expiration time of a low-power receiver inactivity timer when an expiration time of reception of the downlink data channel or an expiration time of the low-power receiver inactivity timer occurs after the predetermined period.

11. A user equipment (UE) performing wireless communication using a low-power receiver (low power wakeup receiver, LR), comprising:
a low-power receiver;
a transceiver; and
a controller configured to control an operation of the low-power receiver and the transceiver, wherein the controller:
receives setting information including configuration information regarding a low-power wake-up operation and configuration information regarding a discontinuous reception (DRX) operation;
monitors a wake-up signal (low power wake-up signal, LP-WUS) through the low-power receiver based on the setting information;
monitors a downlink control channel (PDCCH) and receives a downlink data channel (PDSCH), through a transceiver, upon receiving the wake-up signal; and
changes the DRX operation for a predetermined period, based on the setting information.

12. The UE of claim 11, wherein the setting information is received through at least one of higher layer signaling and the wake-up signal.

13. The UE of claim 11, wherein the controller perform operation for preventing a DRX on-duration timer (drx-onDurationTimer) for the DRX on-duration from starting when an expiration time of reception of the downlink data channel or an expiration time of a low-power receiver inactivity timer (WUR inactivity timer) occurs before the DRX on-duration in the predetermined period.

14. The UE of claim 11, wherein the controller performs operation for stopping a DRX on-duration timer for the DRX on-duration when an expiration time of reception of the downlink data channel or an expiration time of a low-power receiver inactivity timer occurs during the DRX on-duration in the predetermined period.

15. The UE of claim 11, wherein the controller performs operations not to start or to stop a DRX on-duration timer for the DRX on-duration in a period including an expiration time of a low-power receiver inactivity timer when an expiration time of reception of the downlink data channel or an expiration time of the low-power receiver inactivity timer occurs after the predetermined section.
